(19) Europäisches Patentamt
European Patent Office
Office européen des brevets

(11) EP 4 621 034 A1

(12) # EUROPEAN PATENT APPLICATION

published in accordance with Art. 153(4) EPC

(43) Date of publication:
**24.09.2025 Bulletin 2025/39**

(21) Application number: **23897639.3**

(22) Date of filing: **22.11.2023**

(51) International Patent Classification (IPC):
***C10M 145/14*** *(2006.01)* ***C10M 149/04*** *(2006.01)*
***C10M 149/06*** *(2006.01)* ***C10N 20/02*** *(2006.01)*
***C10N 20/04*** *(2006.01)* ***C10N 30/06*** *(2006.01)*
***C10N 40/04*** *(2006.01)* ***C10N 40/06*** *(2006.01)*
***C10N 40/08*** *(2006.01)* ***C10N 40/25*** *(2006.01)*

(52) Cooperative Patent Classification (CPC):
**C10M 145/14; C10M 149/04; C10M 149/06**

(86) International application number:
**PCT/JP2023/041951**

(87) International publication number:
**WO 2024/116991 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 JP 2022191748**

(71) Applicant: **Sanyo Chemical Industries, Ltd.**
**Kyoto-shi, Kyoto 605-0995 (JP)**

(72) Inventors:
- **UENO, Kazushi**
  **Kyoto-shi, Kyoto 605-0995 (JP)**
- **YAMASHITA, Hiroki**
  **Kyoto-shi, Kyoto 605-0995 (JP)**

(74) Representative: **Manitz Finsterwald**
**Patent- und Rechtsanwaltspartnerschaft mbB**
**Martin-Greif-Straße 1**
**80336 München (DE)**

(54) **WEAR INHIBITOR AND LUBRICATING OIL COMPOSITION**

(57) The present invention aims to provide an anti-wear agent having a high anti-wear effect and a lubricating oil composition containing the anti-wear agent. The present invention relates to an anti-wear agent containing a copolymer (A) that contains, as essential constituent monomers: a monomer (a) represented by the following formula (1); and a monomer (b) represented by the following formula (2), a weight ratio (b/a) of the monomer (b) to the monomer (a) in the copolymer (A) being 0.0005 to 0.12, the formula (1) being as follows:

[Chem. 1]

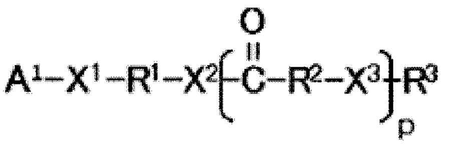

(1)

wherein $A^1$ is a polymerizable group; $-X^1-$, $-X^2-$, and $-X^3-$are each independently a group represented by -O- or -NH-; $R^1$ is a C1-C4 alkylene group; $R^2$ is a C2-C20 alkylene group; $R^3$ is a hydrogen atom, a linear or branched C1-C44 alkyl group, a phenyl group having a linear or branched C1-C44 alkyl group, an acyl group having a linear or branched C1-C44 alkyl group, or a benzoyl group having a linear or branched C1-C44 alkyl group; and p is an integer of 1 to 100, where when p is 2 or more, a plurality of $R^2$'s are the same as or different from each other and a plurality of $X^3$'s are the same as or different from each other, the formula (2) being as follows:

EP 4 621 034 A1

[Chem. 2]

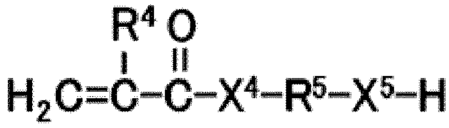

(2)

wherein $R^4$ is a hydrogen atom or a methyl group; $-X^4-$ is a group represented by -O- or -NH-; $R^5$ is a C1-C4 alkylene group; and $-X^5-$ is a group represented by -O- or -NH-.

## Description

### TECHNICAL FIELD

The present invention relates to anti-wear agents and lubricating oil compositions.

### BACKGROUND ART

In recent years, to improve fuel economy, there has been an increasing demand for compact and lightweight vehicle transmissions with higher power transmission efficiency. In vehicle transmission systems, manual transmissions have been replaced by automatic transmissions, and recently, some vehicles have adopted continuously variable transmissions. Electric vehicles equipped with electric motors and batteries such as lead-acid batteries, nickel-hydride batteries, lithium-ion batteries, and fuel cells and hybrid vehicles equipped with such batteries in combination with internal combustion engines have been developed. In these vehicles, a transmission oil and an electric motor oil have been used separately.

In recent electric vehicles and hybrid vehicles, replacement of these oils with a single oil and a compact, lightweight design achieved through the integration of the transmission and electric motor into a single unit have been increasingly sought. A new type of oil is required that has the anti-wear properties of a manual transmission oil, automatic transmission oil, or continuously variable transmission oil, as well as the insulating properties and compatibility with copper of an electric motor oil.

To meet the requirements such as anti-wear properties and seizure resistance, friction modifiers are used. In general, friction modifiers such as phosphates, zinc dithiophosphates, and organic sulfur compounds are added to mineral oil base oils or synthetic base oils. However, transmission oils containing such friction modifiers can cause copper corrosion and have insufficient insulating properties, causing issues such as copper wire damage and short-circuiting of electric motors when used as electric motor oils. To overcome such issues, friction modifiers that are compatible with copper and that provide insulation properties and anti-wear properties have become increasingly important for use in electric vehicles and hybrid vehicles.

Examples of friction modifiers that do not deteriorate compatibility with copper and insulating properties include polymeric friction modifiers that do not contain sulfur or phosphorus as a constituent element. Specific examples include copolymers containing $\alpha$-olefins and fumaric acid esters (Patent Literature 1), acrylic acid ester copolymers having hydroxy groups (Patent Literature 2), polyesters containing hydrophilic polymer units and polyolefin units (Patent Literature 3), and methacrylic acid ester copolymers having a block structure containing a polar segment unit and a hydrophobic segment unit (Patent Literature 4). These polymeric friction modifiers however cannot sufficiently reduce friction.

Known friction modifiers capable of solving the above issues include (meth)acrylic acid ester copolymers containing a monomer with a specific structure as an essential constituent monomer (Patent Literatures 5 and 6). These friction modifiers greatly reduce friction, but their anti-wear effect is not known.

### CITATION LIST

- Patent Literature

Patent Literature 1: JP 3730660 B2
Patent Literature 2: JP 5822706 B2
Patent Literature 3: JP 5684832 B2
Patent Literature 4: JP 4686444 B2
Patent Literature 5: JP 2022-151618 A
Patent Literature 6: JP 6582021 B2


### SUMMARY OF INVENTION

- Technical Problem

The present invention aims to provide an anti-wear agent having a high anti-wear effect and a lubricating oil composition containing the anti-wear agent.

- Solution to Problem

As a result of extensive studies, the present inventors reached the present invention.

Specifically, the present invention relates to an anti-wear agent containing a copolymer (A) that contains, as essential constituent monomers: a monomer (a) represented by the following formula (1); and a monomer (b) represented by the following formula (2), a weight ratio (b/a) of the monomer (b) to the monomer (a) in the copolymer (A) being 0.0005 to 0.12. The present invention also relates to a lubricating oil composition containing the anti-wear agent and a base oil. The formula (1) is as follows:

[Chem. 1]

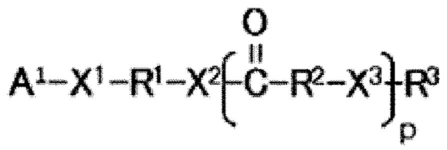

(1)

wherein $A^1$ is a polymerizable group; $-X^1-$, $-X^2-$, and $-X^3-$are each independently a group represented by -O- or -NH-; $R^1$ is a C1-C4 alkylene group; $R^2$ is a C2-C20 alkylene group; $R^3$ is a hydrogen atom, a linear or branched C1-C44 alkyl group, a phenyl group having a linear or branched C1-C44 alkyl group, an acyl group having a linear or branched C1-C44 alkyl group, or a benzoyl group having a linear or branched C1-C44 alkyl group; and p is an integer of 1 to 100, where when p is 2 or more, a plurality of $R^2$'s are the same as or different from each other and a plurality of $X^3$'s are the same as or different from each other. The formula (2) is as follows:

[Chem. 2]

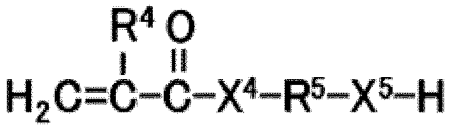

(2)

wherein $R^4$ is a hydrogen atom or a methyl group; $-X^4-$ is a group represented by -O- or -NH-; $R^5$ is a C1-C4 alkylene group; and $-X^5-$ is a group represented by -O- or -NH-.

- Advantageous Effects of Invention

The anti-wear agent of the present invention and the lubricating oil composition containing the anti-wear agent of the present invention have an excellent anti-wear effect.

DESCRIPTION OF EMBODIMENTS

<Anti-wear agent>

The anti-wear agent of the present invention contains a copolymer (A) that contains, as essential constituent monomers: a monomer (a) represented by the following formula (1); and a monomer (b) represented by the following formula (2), a weight ratio (b/a) of the monomer (b) to the monomer (a) in the copolymer (A) being 0.0005 to 0.12, the formula (1) being as follows:

[Chem. 3]

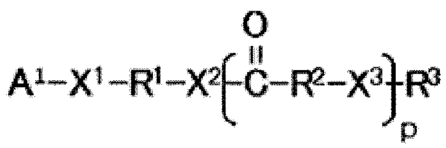

(1)

wherein $A^1$ is a polymerizable group; $-X^1-$, $-X^2-$, and $-X^3-$are each independently a group represented by -O- or -NH-; $R^1$ is a

C1-C4 alkylene group; $R^2$ is a C2-C20 alkylene group; $R^3$ is a hydrogen atom, a linear or branched C1-C44 alkyl group, a phenyl group having a linear or branched C1-C44 alkyl group, an acyl group having a linear or branched C1-C44 alkyl group, or a benzoyl group having a linear or branched C1-C44 alkyl group; and p is an integer of 1 to 100, where when p is 2 or more, a plurality of R2's are the same as or different from each other and a plurality of X3's are the same as or different from each other, the formula (2) being as follows:

[Chem. 4]

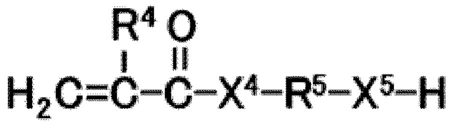

(2)

wherein $R^4$ is a hydrogen atom or a methyl group; $-X^4-$ is a group represented by -O- or -NH-; $R^5$ is a C1-C4 alkylene group; and $-X^5-$ is a group represented by -O- or -NH-.

The anti-wear effect herein is an ability of a lubricating oil composition to withstand without seizure under high load conditions that are likely to cause wear, such as under a load of 700 N or higher, and can be evaluated by measuring the extent of the load the composition can withstand.

On the other hand, the friction reduction effect is an ability of a lubricating oil composition to reduce the kinetic energy loss under low load conditions that cannot cause wear, such as under a load of 30 N, and can be evaluated by measuring the extent of the reduction of the kinetic energy loss.

As described above, the anti-wear effect and the friction reduction effect are different properties.

<Copolymer (A)>

Herein, the copolymer (A) contains, as essential constituent monomers, a monomer (a) represented by the formula (1) and a monomer (b) represented by the formula (2). The weight ratio (b/a) of the monomer (b) to the monomer (a) in the copolymer (A) is 0.0005 to 0.12.

In the present invention, the copolymer (A) contains the monomer (a) represented by the formula (1) as an essential constituent monomer.

In the formula (1), $A^1$ is a monovalent polymerizable group. The polymerizable group means a functional group capable of undergoing a polymerization reaction, and is specifically a radically polymerizable group or a cationically polymerizable group. Specific examples of the polymerizable group include a vinyl group and a (meth)acryloyl group.

From the viewpoint of anti-wear properties, $A^1$ is preferably a vinyl group or a (meth)acryloyl group, more preferably a (meth)acryloyl group.

In the present invention, "(meth)acryloyl" means "acryloyl and/or methacryloyl", and "(meth)acrylate" means "acrylate and/or methacrylate".

In the formula (1), $-X^1-$, $-X^2-$, and $-X^3-$ are each independently a group represented by -O- or -NH-.

From the viewpoint of anti-wear properties, $-X^1-$, $- X^2-$, and $-X^3-$ are each preferably -O-.

In the formula (1), $R^1$ is a C1-C4 alkylene group.

Examples of the C1-C4 alkylene group include a methylene group, an ethylene group, a 1,2- or 1,3-propylene group, and a 1,2-, 1,3-, or 1,4-butylene group. From the viewpoint of anti-wear properties, preferred of these are an ethylene group and a 1,2- or 1,3-propylene group, with an ethylene group being more preferred.

In the formula (1), p represents the number of moles of a lactam and/or a lactone added, which are described below, and is an integer of 1 to 100. From the viewpoints of anti-wear properties and base oil solubility, it is preferably an integer of 1 to 70, more preferably an integer of 1 to 40, particularly preferably an integer of 1 to 20, most preferably an integer of 1 to 10.

When p is 2 or more, a plurality of $R^2$'s may be the same as or different from each other and a plurality of $X^3$'s may be the same as or different from each other.

In the monomer (a) among the copolymer (A)-constituting monomers, the average value of p per mole of the monomer (a) (average number of moles added, hereinafter also referred to as a molar average value of p) preferably falls within the range of 1 to 100, more preferably 1 to 70, still more preferably 1 to 40, particularly preferably 1 to 20, most preferably 1 to 10.

When the monomer (a) constituting the copolymer (A) includes two or more monomers, the molar average value of p in the formula (1) is obtained by calculating the weighted average of the p values of the respective monomers included in the monomer (a) based on the molar fractions of the respective monomers.

The molar fractions of the monomers included in the monomer (a) having different p values can be calculated by analyzing the chemical formula and amount of each monomer constituting the copolymer (A) by a method such as

pyrolysis GC/MS.

Alternatively, when the p value of each monomer before incorporation into the copolymer (A) is measured, the molar average value of p can be determined from the $^1$H-NMR (nuclear magnetic resonance) spectrum of the monomer (a). In an example where the "lactam and/or lactone" is ε-caprolactone, the molar average value of p can be calculated by dividing half of the integral value of the peak near 1.4 ppm (the peak of γ-hydrogen to the carbonyl carbon derived from ε-caprolactone) by the integral value of the peak near 6.4 ppm or the integral value of the peak near 6.1 ppm (the peak of one of the hydrogen atoms bonded to the unsaturated double bond of the acryloyl group or methacryloyl group).

The γ-hydrogen to the carbonyl carbon derived from ε-caprolactone refers to a hydrogen atom bonded to the carbon atom marked with * in the structural formula derived from ε-caprolactone ($-CO-CH_2-CH_2-C^*H_2-CH_2-CH_2-O-$).

The hydrogen atom bonded to the unsaturated double bond of the acryloyl group refers to a hydrogen atom bonded to the carbon atom marked with * in the structural formula of the acryloyl group represented by $H_2C^*=CH-CO-$. The hydrogen atom bonded to the unsaturated double bond of the methacryloyl group refers to a hydrogen atom bonded to the carbon atom marked with * in the structural formula of the methacryloyl group represented by $H_2C^*=C(CH_3)-CO-$.

Specifically, the molar average value of p can be calculated by the following formula.

(The case where A1 in the formula (1) is an acryloyl group)

Molar average value of p = (half of integral value of peak of γ-hydrogen to carbonyl carbon derived from ε-caprolactone)/(integral value of peak of one of hydrogen atoms bonded to unsaturated double bond of acryloyl group)

(The case where $A^1$ in the formula (1) is a methacryloyl group)

Molar average value of p = (half of integral value of peak of γ-hydrogen to carbonyl carbon derived from ε-caprolactone)/(integral value of peak of one of hydrogen atoms bonded to unsaturated double bond of methacryloyl group)

$R^2$ in the formula (1) represents a C2-C20 alkylene group. Specific examples of the C2-C20 alkylene group include an ethylene group, an isopropylene group, a 1,2- or 1,3-propylene group, an isobutylene group, a 1,2-, 1,3-, or 1,4-butylene group, an isopentylene group, a 1,2-, 1,3-, 1,4-, or 1,5-pentylene group, an isohexylene group, a 1,2-, 1,3-, 1,4-, 1,5-, or 1,6-hexylene group, an isoheptylene group, a 1,2-, 1,3-, 1,4-, 1,5-, 1,6-, or 1,7-heptylene group, an isooctylene group , a 1,8-octylene group, an isononylene group, a 1,9-nonylene group, an isodecylene group, a 1,10-decylene group, an isoundecylene group, a 1,11-undecylene group, an isododecylene group, a 1,12-dodecylene group, an isotridecylene group, a 1,13-tridecylene group, an isotetradecylene group, a 1,14-tetradecylene group, an isopentadecylene group, a 1,15-pentadecylene group, an isohexadecylene group, a 1,16-hexadecylene group, an isoheptadecylene group, a 1,17-heptadecylene group, an isooctadecylene group, a 1,18-isooctadecylene group, an isononadecylene group, a 1,19-isononadecylene group, an isoeicosylene group, and a 1,20-eicosylene group.

From the viewpoints of anti-wear properties, $R^2$ is preferably a C2-C17 alkylene group, more preferably a C2-C15 alkylene group, particularly preferably a C2-C13 alkylene group, most preferably a C2-C10 alkylene group.

In the formula (1), $R^3$ is a hydrogen atom, a linear or branched C1-C44 alkyl group, a phenyl group having a linear or branched C1-C44 alkyl group, an acyl group having a linear or branched C1-C44 alkyl group, or a benzoyl group having a linear or branched C1-C44 alkyl group.

Specific examples of the linear or branched C1-C44 alkyl group include a methyl group, an ethyl group, a propyl group, a butyl group, a hexyl group, an n-octyl group, a 2-ethylhexyl group, an n-nonyl group, an isononyl group, an n-decyl group, an isodecyl group, an n-undecyl group, an isoundecyl group, an n-dodecyl group, an isododecyl group, an n-tridecyl group, an isotridecyl group, an n-tetradecyl group, a 2-ethyldodecyl group, an n-pentadecyl group, a 2-methyltetradecyl group, an n-hexadecyl group, an isohexadecyl group, an n-heptadecyl group, an isoheptadecyl group, a 2-ethylpentadecyl group, a 2-octylnonyl group, a 2-(3-methylhexyl)-7-methyl-nonyl group, an n-octadecyl group, an isooctadecyl group, a 2-hexylundecyl group, a 2-ethylheptadecyl group, a 1-hexyltridecyl group, a n-icosyl group, a 2-octylundecyl group, an isoicosyl group, a 1-undecyldodecyl group, a 1-octylpentadecyl group, a 2-decyltridecyl group, a n-tetraicosyl group, a 2-decyltetradecyl group, a 2-dodecylpentadecyl group, a 2-heptylicosyl group, a 2-dodecylhexadecyl group, a n-triacontyl group, 2-tetradecyloctadecyl group, a n-hexatriacontyl group, a n-tetracontyl group, a 2-ethyltetracontyl group, and groups obtained by removing a hydroxy group from an oxoalcohol obtained from an olefin (e.g., propylene oligomers (dimer to tetradecamer), ethylene/propylene oligomers (dimer to eicosamer), and isobutene oligomers (dimer to decamer)).

Examples of the phenyl group having a linear or branched C1-C44 alkyl group include groups (e.g., a tolyl group) in which one, some, or all of the hydrogen atoms of the phenyl group are replaced by a linear or branched C1-C44 alkyl group. Examples of the linear or branched C1-C44 alkyl group in the phenyl group are as described above.

Examples of the acyl group having a linear or branched C1-C44 alkyl group include acyl groups derived from a C2-C45 carboxylic acid having a C1-C44 alkyl group, such as an acetyl group, a propionyl group, a butanoyl group, a pentanoyl group, a hexanoyl group, a heptanoyl group, an octanoyl group, a nonanoyl group, a decanoyl group, a lauroyl group, a myristoyl group, and a palmitoyl group.

Examples of the benzoyl group having a linear or branched C1-C44 alkyl group include groups in which one, some, or all of the hydrogen atoms of a benzoyl group are replaced by a linear or branched C1-C44 alkyl group. Examples of the linear or branched C1-C44 alkyl group in the benzoyl group are as described above.

Of these groups for $R^3$, from the viewpoint of anti-wear properties, preferred are a hydrogen atom, a linear or branched C1-C12 alkyl group, a C2-C13 acyl group (an acyl group having a linear or branched C1-C12 alkyl group), a phenyl group having a linear or branched C1-C12 alkyl group, and a benzoyl group having a linear or branched C1-C12 alkyl group, more preferred are a hydrogen atom, a linear C1-C12 alkyl group, an acyl group having a linear C1-C12 alkyl group, a phenyl group having a linear C1-C12 alkyl group, and a benzoyl group having a linear C1-C12 alkyl group, and particularly preferred is a hydrogen atom.

From the viewpoint of anti-wear properties, the monomer (a) is preferably an adduct (a1) of a hydroxyalkyl (meth) acryloyl monomer with a lactone (1 to 100 mol), an adduct (a2) of a hydroxyalkyl (meth)acryloyl monomer with a lactam (1 to 100 mol), an adduct (a3) of an aminoalkyl (meth)acryloyl monomer with a lactone (1 to 100 mol), an adduct (a4) of an aminoalkyl (meth)acryloyl monomer with a lactam (1 to 100 mol), an ester (a5) of the adduct (a1) or (a3) with a monocarboxylic acid (e.g., a C2-C45 monocarboxylic acid), an amide (a6) of the adduct (a2) or (a4) with a monocarboxylic acid (e.g., a C2-C45 monocarboxylic acid), or an ether (a7) which is a product of a reaction between the adduct (a1) or (a3) and a C1-C44 alkylating agent. More preferred is the adduct (a1) of a hydroxyalkyl (meth)acryloyl monomer with a lactone (1 to 100 mol).

In the above examples, the number of moles of lactone or lactam added refers to the average number of moles added.

Examples of the hydroxyalkyl (meth)acryloyl monomer include hydroxyalkyl (meth)acrylates (e.g., hydroxymethyl (meth)acrylate, hydroxyethyl (meth)acrylate, hydroxypropyl (meth)acrylate, hydroxybutyl (meth)acrylate) and hydroxyalkyl (meth)acrylamides (e.g., hydroxymethyl (meth)acrylamide, hydroxyethyl (meth)acrylamide, hydroxypropyl (meth)acrylamide, hydroxybutyl (meth)acrylamide).

Examples of the aminoalkyl (meth)acryloyl monomer include aminoalkyl (meth)acrylates (e.g., aminomethyl (meth)acrylate, aminoethyl (meth)acrylate, aminopropyl (meth)acrylate, aminobutyl (meth)acrylate) and aminoalkyl (meth)acrylamides (e.g., aminomethyl (meth)acrylamide, aminoethyl (meth)acrylamide, aminopropyl (meth)acrylamide, aminobutyl (meth)acrylamide).

The lactone includes those having 3 to 21 carbon atoms, such as β-propiolactone, γ-butyrolactone, δ-valerolactone, and ε-caprolactone.

The lactam includes those having 3 to 21 carbon atoms, such as β-lactam, γ-lactam, and δ-lactam.

Examples of the monocarboxylic acid include: C2-C45 monocarboxylic acids such as saturated aliphatic monocarboxylic acids (e.g., ethanoic acid, propanoic acid, butanoic acid, pentanoic acid, hexanoic acid, octanoic acid, nonanoic acid, decanoic acid, dodecanoic acid, tetradecanoic acid, hexadecanoic acid, heptadecanoic acid, and octadecanoic acid) and unsaturated aliphatic monocarboxylic acids (e.g., oleic acid, linoleic acid, linolenic acid, arachidonic acid, and docosahexanoic acid); and aromatic monocarboxylic acids (e.g., benzoic acid, compounds obtained by replacing one or some of the hydrogen atoms bonded to the aromatic ring of benzoic acid by a C1-C44 alkyl group(s)).

Examples of the C1-C44 alkylating agent include alkyl chlorides such as methyl chloride, ethyl chloride, propyl chloride, butyl chloride, isopropyl chloride, and allyl chloride; and alkyl bromides such as methyl bromide, ethyl bromide, propyl bromide, butyl bromide, and isopropyl bromide.

From the viewpoint of anti-wear properties, the monomer (a) is preferably an adduct of a hydroxyalkyl (meth) acrylate (the carbon number of the hydroxyalkyl group is 1 to 4) with a lactone (1 to 10 mol), more preferably an adduct of a hydroxyalkyl (meth)acrylate (the carbon number of the hydroxyalkyl group is 2 to 4) with a lactone (1 to 10 mol), still more preferably an adduct of a hydroxyalkyl (meth)acrylate (the carbon number of the hydroxyalkyl group is 2 or 3) with ε-caprolactone (1 to 10 mol), particularly preferably an adduct of hydroxyethyl (meth)acrylate with ε-caprolactone (1 to 10 mol).

The adduct of a hydroxyalkyl (meth)acryloyl monomer or aminoalkyl (meth)acryloyl monomer with a lactone (1 to 100 mol) can be obtained, for example, by ring-opening addition of a lactone to a hydroxyalkyl (meth)acryloyl monomer or aminoalkyl (meth)acryloyl monomer.

The reaction temperature during the ring-opening addition reaction is preferably 80°C to 150°C, more preferably 100°C to 140°C, from the viewpoint of reaction time.

The reaction time is preferably 2 to 24 hours, more preferably 3 to 10 hours.

The reaction may be performed in the presence of a catalyst.

The catalyst for the reaction may be any known catalyst, such as p-toluenesulfonic acid, tetrapropyl titanate, or stannous octanoate.

The amount of the catalyst used is preferably 0.01 to 5% by mass, more preferably 0.03 to 0.5% by mass, relative to the amount of a reaction product.

After the completion of the ring-opening addition reaction, the catalyst is desirably treated. For example, the catalyst is absorbed with an adsorbent and removed by filtering, or the catalyst is inactivated by neutralization.

The adduct of a hydroxyalkyl (meth)acryloyl monomer or aminoalkyl (meth)acryloyl monomer with a lactam (1 to 100 mol) can be obtained, for example, by ring-opening addition of a lactam to a hydroxyalkyl (meth)acryloyl monomer or aminoalkyl (meth)acryloyl monomer.

The reaction temperature during the ring-opening addition reaction of the lactam is preferably 80°C to 150°C, more preferably 100°C to 140°C, from the viewpoint of reaction time.

The reaction time is preferably 2 to 24 hours, more preferably 3 to 10 hours.

The reaction may be performed in the presence of a catalyst.

The catalyst for the reaction may be any known catalyst, such as tetrapropyl titanate or stannous octanoate.

The amount of the catalyst used is preferably 0.01 to 5% by weight, more preferably 0.03 to 0.5% by weight, relative to the amount of a reaction product.

After the completion of the ring-opening addition reaction, the catalyst is desirably treated. For example, the catalyst is absorbed with an adsorbent and removed by filtering, or the catalyst is inactivated by neutralization.

The reaction temperature of the esterification reaction between the adduct (a1) of a hydroxyalkyl (meth)acryloyl monomer with a lactone (1 to 100 mol) or the adduct (a3) of an aminoalkyl (meth)acryloyl monomer with a lactone (1 to 100 mol) and a monocarboxylic acid (e.g., a C2-C45 monocarboxylic acid) is preferably 80°C to 150°C, more preferably 90°C to 130°C, from the viewpoints of the reaction time and prevention of polymerization of (meth)acrylic acid.

The esterification reaction may be carried out under reduced pressure in order to remove water produced. From the viewpoints of the reaction time and prevention of polymerization, the reaction pressure is preferably 0.007 to 0.095 MPa, more preferably 0.01 to 0.092 MPa.

The reaction time is preferably 2 to 24 hours, more preferably 3 to 10 hours. The esterification reaction is desirably carried out in the presence of a catalyst.

The catalyst for the esterification reaction may be any known catalyst, such as sulfuric acid or p-toluenesulfonic acid. A solvent may be used in the esterification reaction. Examples of the solvent include water-insoluble solvents having a boiling point of 150°C or lower, such as cyclohexane and toluene.

The reaction temperature of the amidation reaction between the adduct (a2) of a hydroxyalkyl (meth)acryloyl monomer with a lactam (1 to 100 mol) or the adduct (a4) of an aminoalkyl (meth)acryloyl monomer with a lactam (1 to 100 mol) and a monocarboxylic acid (e.g., a C2-C45 monocarboxylic acid) is preferably 80°C to 150°C, more preferably 90°C to 130°C, from the viewpoints of the reaction time and prevention of polymerization of (meth)acrylic acid.

The amidation reaction may be carried out under reduced pressure in order to remove water produced. From the viewpoints of the reaction time and prevention of polymerization, the reaction pressure is preferably 0.007 to 0.095 MPa, more preferably 0.01 to 0.092 MPa.

The reaction time is preferably 2 to 24 hours, more preferably 3 to 10 hours.

The adduct (a1) of a hydroxyalkyl (meth)acryloyl monomer with a lactone (1 to 100 mol) or the product of a reaction between the C1-C44 alkylating agent and the adduct (a3) of an aminoalkyl (meth)acryloyl monomer with a lactone (1 to 100 mol) can be obtained by carrying out a reaction under general conditions in the presence of an alkali (e.g., an amine, a quaternary ammonium salt, sodium hydroxide).

From the viewpoint of solubility in a lubricating oil base oil, a structural unit derived from the monomer (a) (a structure including a single bond obtained by a reaction of the polymerizable group (e.g., a vinyl group) of the monomer (a)) preferably has a specific solubility parameter (hereinafter sometimes abbreviated as a SP value).

The SP value of the structural unit derived from the monomer (a) is preferably 9.0 to 12.5 $(cal/cm^3)^{1/2}$, more preferably 9.3 to 12.3 $(cal/cm^3)^{1/2}$, particularly preferably 9.5 to 12.0 $(cal/cm^3)^{1/2}$,

The SP value herein refers to a value calculated using the numerical values (the heat of vaporization and the molar volume at 25°C of an atom or a functional group) disclosed in the Fedors method (Polymer Engineering and Science, February, 1974, Vol. 14, No. 2, pp. 147-154) on p. 152 (Table 5) and using the equation (28) described on p. 153. Specifically, the SP value can be calculated by substituting, into the equation below, the numerical values $\Delta e_i$ and $v_i$ corresponding to the types of atoms and groups in the molecular structure selected from the numerical values of $\Delta e_i$ and $v_i$ (Fedors parameters) in Table 1 below.

$$\text{SP value} = (\Sigma\Delta e_i/\Sigma v_i)^{1/2}$$

[Table 1]

Fedors parameters

| Atom or group | $\Delta e_i$ [cal/mol] | $v_i$ [$cm^3$/mol] |
|---|---|---|
| $CH_3$ | 1125 | 33.5 |
| $CH_2$ | 1180 | 16.1 |
| CH | 820 | -1.0 |
| C | 350 | -19.2 |
| $H_2C=$ | 1030 | 28.5 |
| -CH= | 1030 | 13.5 |
| C= | 1030 | -5.5 |
| HC≡ | 920 | 27.4 |
| -C≡ | 1690 | 6.5 |
| Phenyl | 7630 | 71.4 |
| Phenylene (o.m.p) | 7630 | 52.4 |
| Phenyl (trisubstituted) | 7630 | 33.4 |
| Phenyl (tetrasubstituted) | 7630 | 14.4 |
| Phenyl (pentasubstituted) | 7630 | -4.6 |
| Phenyl (hexasubstituted) | 7630 | -23.6 |
| Ring closure 5 or more atoms | 250 | 16 |
| Ring closure 3 or 4 atoms | 750 | 18 |
| $CO_3$ (carbonate) | 4200 | 22.0 |
| COOH | 6600 | 28.5 |
| $CO_2$ | 4300 | 18.0 |
| CO | 4150 | 10.8 |
| CHO (aldehyde) | 5100 | 22.3 |
| $CO_2CO_2$ (oxalate) | 6400 | 37.3 |
| $C_2O_3$ (anhydride) | 7300 | 30.0 |
| HCOO (formate) | 4300 | 32.5 |
| $CONH_2$ | 10000 | 17.5 |
| CONH | 8000 | 9.5 |
| CON | 7050 | -7.7 |
| HCON | 6600 | 11.3 |
| HCONH | 10500 | 27.0 |
| COCl | 5000 | 38.0 |
| $NH_2$ | 3000 | 19.2 |
| NH | 2000 | 4.5 |
| N | 1000 | -9.0 |
| -N= | 2800 | 5.0 |
| CN | 6100 | 24.0 |
| $NO_2$ (aliphatic) | 7000 | 24.0 |
| $NO_2$ (aromatic) | 3670 | 32.0 |
| $NO_3$ | 5000 | 33.5 |
| $NO_2$ (nitrite) | 2800 | 33.5 |
| CSN | 4800 | 37.0 |
| NCO | 6800 | 35.0 |
| $NF_2$ | 1830 | 33.1 |
| $NF_2$ | 1210 | 24.5 |
| O | 800 | 3.8 |
| OH | 7120 | 10.0 |
| OH (disubstituted or on adjacent C atoms) | 5220 | 13.0 |

When the copolymer (A) contains two or more monomers as monomer (a), it is preferable that the arithmetic mean of the SP values of the monomers falls within the above-mentioned range. Here, the SP value of each monomer is calculated by the above-mentioned method, and the arithmetic mean is determined based on the weight fraction and the SP value of each monomer.

The molecular formula weight or number average molecular weight (hereinafter abbreviated as Mn) of the

monomer (a) is preferably 150 to 20,000, more preferably 150 to 10,000, particularly preferably 150 to 7,000, most preferably 150 to 4,000, from the viewpoint of anti-wear properties.

The molecular formula weight or Mn of the monomer (a), the Mn of the monomer (c), and the weight average molecular weight (hereinafter abbreviated as Mw) of the copolymer (A), which is described later, can be measured by gel permeation chromatography (hereinafter abbreviated as GPC) under the following conditions.

<Conditions for measuring Mn of monomer (a), Mn of monomer (c), and Mw of copolymer (A)>

Apparatus: "HLC-8320GPC" (Tosoh Corporation)
Column: "TSKgel guardcolumn Super HZ-L" (Tosoh Corporation), a single column; "TSKgel Super HZM-M" (Tosoh Corporation), three columns
Measurement temperature: 40°C
Sample solution: a 0.25% by weight tetrahydrofuran solution Amount of solution to be injected: 10 μl
Detector: RI (differential refractometer)
Reference material: 11 types of standard polystyrene (TSKstandard POLYSTYRENE) (molecular weight: 589, 1,013, 2,630, 9,100, 19,500, 37,900, 96,400, 190,000, 427,000, 1,090,000, 2,110,000) (Tosoh Corporation)

In the present invention, the copolymer (A) contains the monomer (b) represented by the formula (2) as an essential constituent monomer.

In the formula (2), $R^4$ is a hydrogen atom or a methyl group. From the viewpoints of wear prevention and a viscosity index improving effect, a methyl group is preferred.

In the formula (2), $-X^4-$ is a group represented by - O- or -NH-, and is preferably a group represented by -O-from the viewpoint of wear prevention.

In the formula (2), $R^5$ is a C1-C4 alkylene group.

Examples of the C1-C4 alkylene group include a methylene group, an ethylene group, a 1,2- or 1,3-propylene group, and a 1,2-, 1,3-, or 1,4-butylene group. From the viewpoint of base oil solubility, preferred of these are an ethylene group and a 1,2- or 1,3-propylene group, with an ethylene group being more preferred.

In the formula (2), $-X^5-$ is a group represented by - O- or -NH-, and is preferably a group represented by -O-from the viewpoint of anti-wear properties.

Specific examples of the monomer (b) include hydroxymethyl (meth)acrylate, hydroxyethyl (meth)acrylate, hydroxypropyl (meth)acrylate, hydroxybutyl (meth)acrylate, 2-hydroxypropyl (meth)acrylate, 1-methyl-2-hydroxyethyl (meth)acrylate, 2-methyl-3-hydroxypropyl (meth)acrylate, 2-hydroxy-2-methylpropyl (meth)acrylate, 2-hydroxybutyl (meth)acrylate, 2-hydroxy-1-methylpropyl (meth)acrylate, aminomethyl (meth)acrylate, aminoethyl (meth)acrylate, aminopropyl (meth)acrylate, and aminobutyl (meth)acrylate.

Of these, from the viewpoint of anti-wear properties, hydroxyethyl (meth)acrylate, hydroxypropyl (meth)acrylate, and 2-hydroxy-2-methylpropyl (meth)acrylate are preferred, and hydroxyethyl (meth)acrylate is more preferred.

Herein, from the viewpoint of base oil solubility, the copolymer (A) preferably contains as a constituent monomer a monomer (c) represented by the following formula (3):

[Chem. 5]

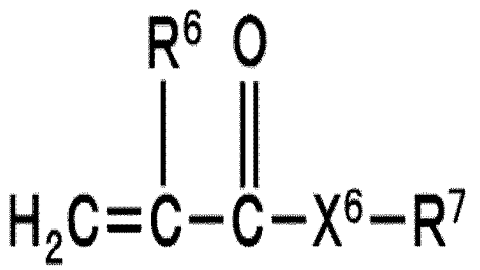

(3)

wherein $R^6$ is a hydrogen atom or a methyl group; $-X^6-$ is a group represented by -O-, $-O(AO)_m-$, or -NH-, where A is a C2-C4 alkylene group and m is an integer of 1 to 10, where when m is 2 or more, a plurality of As are the same as or different from each other; and $R^7$ is a linear or branched C5-C700 alkyl group.

In the monomer (c) represented by the formula (3), $R^6$ is a hydrogen atom or a methyl group, and from the viewpoint of wear prevention, a methyl group is preferred.

In the monomer (c) represented by the formula (3), - $X^6$- is a group represented by -O-, -O(AO)$_m$-, or -NH-.

A is a C2-C4 alkylene group.

Examples of the C2-C4 alkylene group include an ethylene group, a 1,2- or 1,3-propylene group, and a 1,2-, 1,3- or 1,4-butylene group.

m is an integer of 1 to 10, and is preferably an integer of 1 to 4, more preferably an integer of 1 or 2, from the viewpoint of base oil solubility.

When m is 2 or more, As may be the same as or different from each other, and (AO)$_m$ may be bonded to each other in a random form or a block form.

From the viewpoint of lubricity, -$X^6$- is preferably a group represented by -O- or -O(AO)$_m$-, more preferably a group represented by -O- or -$O(CH_2CH_2O)_m$-.

In the monomer (c) represented by the formula (3), $R^7$ is a linear or branched C5-C700 alkyl group.

Examples of the linear or branched C5-C700 alkyl group include a pentyl group, a hexyl group, an n-octyl group, a 2-ethylhexyl group, an n-nonyl group, an isononyl group, an n-decyl group, an isodecyl group, an n-undecyl group, an isoundecyl group, an n-dodecyl group, an isododecyl group, an n-tridecyl group, an isotridecyl group, an n-tetradecyl group, a 2-ethyldodecyl group, an n-pentadecyl group, a 2-methyltetradecyl group, an n-hexadecyl group, an isohexadecyl group, an n-heptadecyl group, an isoheptadecyl group, a 2-ethylpentadecyl group, a 2-octylnonyl group, a 2-(3-methylhexyl)-7-methyl-nonyl group, an n-octadecyl group, an isooctadecyl group, a 2-hexylundecyl group, a 2-ethylheptadecyl group, a 1-hexyltridecyl group, a n-icosyl group, a 2-octylundecyl group, an isoicosyl group, a 1-undecyldodecyl group, a 1-octylpentadecyl group, a 2-decyltridecyl group, a n-tetraicosyl group, a 2-decyltetradecyl group, a 2-dodecylpentadecyl group, a 2-heptylicosyl group, a 2-dodecylhexadecyl group, a n-triacontyl group, 2-tetradecyloctadecyl group, a n-hexatriacontyl group, a n-tetracontyl group, a 2-ethyltetracontyl group, and polyolefins [e.g., propylene oligomers or polymers (dimer to 233-mer), ethylene/propylene oligomers or polymers (dimer to 300-mer), isobutene oligomers or polymers (dimer to 175-mer), butadiene oligomers or polymers (e.g., dimer to 175-mer) which, when having double bonds, may be hydrogenated ones obtained by hydrogenation of one, some, or all of the double bonds].

The molecular formula weight or Mn of the monomer (c) is preferably 150 to 10,000, more preferably 250 to 9,000, still more preferably 400 to 8,500. When the molecular formula weight or Mn of the monomer (c) is 150 or more, the lubricity tends to be good, whereas when it is 10,000 or less, the copolymerizability with other monomers tends to be good.

When $R^7$ in the formula (3) is a group obtained by removing one hydrogen atom from a polyolefin, the percentage of butadiene in all monomers constituting the polyolefin (the weight percentage of 1,3-butadiene in all constituent monomers) is preferably 50% by weight or higher, more preferably 75% by weight or higher, still more preferably 85% by weight or higher, particularly preferably 90% by weight or higher, from the viewpoint of lubricity.

When $R^7$ in the formula (3) is a group obtained by removing one hydrogen atom from a polyolefin and the polyolefin is a hydrocarbon polymer containing an isobutylene group and/or a 1,2-butylene group as essential structural unit(s), the total amount of the isobutylene group and the 1,2-butylene group is preferably 30 mol% or more, more preferably 40 mol% or more, still more preferably 50 mol% or more, based on the total molar number of the structural units of the hydrocarbon polymer, from the viewpoint of lubricity.

In the hydrocarbon polymer containing an isobutylene group and/or a 1,2-butylene group as essential structural units in the formula (3), the total amount of the isobutylene group and the 1,2-butylene group can be measured by $^{13}$C-NMR. Specifically, for example, when only C4 monomers are used, the hydrocarbon polymer is analyzed by $^{13}$C-NMR, and the total molar percentage of the isobutylene group and the 1,2-butylene group based on the total number of moles of the structural units of the hydrocarbon polymer can be calculated by the following equation (1). In $^{13}$C-NMR, a peak derived from the methyl groups of the isobutylene group appears at 30 to 32 ppm (integral value A), and a peak derived from the branched methylene groups (-$CH_2CH(CH_2CH_3)$- or -$CH(CH_2CH_3)CH_2$-) of the 1,2-butylene group appears at 26 to 27 ppm (integral value B). The total molar percentage (mol%) of the isobutylene group and the 1,2-butylene group based on the total number of moles of the structural units of the hydrocarbon polymer can be determined from the integral values of the above peaks and an integral value (integral value C) of all carbon peaks of the hydrocarbon polymer.

Total amount of isobutylene group and 1,2-butylene group (mol%) = 100 × {(integral value A) × 2 + (integral value B) × 4}/(integral value C)     (1)

When the hydrocarbon polymer in $R^7$ contains butadiene as a constituent monomer or butadiene and 1-butene as constituent monomers, in butadiene-derived units or butadiene/1-butene-derived units which constitute part or the whole of $R^7$ in the formula (3), the molar ratio of a 1,2-adduct to a 1,4-adduct (1,2-adduct/1,4-adduct) is preferably 5/95 to 95/5, more preferably 20/80 to 80/20, still more preferably 30/70 to 70/30, from the viewpoints of lubricity and copolymerizability with other monomers.

When the hydrocarbon polymer in $R^7$ contains butadiene as a constituent monomer or butadiene and 1-butene as constituent monomers, the molar ratio 1,2-adduct/1,4-adduct in butadiene-derived units or butadiene/1-butene-derived units constituting part or the whole of $R^7$ in the formula (3) can be measured by $^1H$-NMR, $^{13}C$-NMR, Raman spectroscopy, or the like.

The SP value of the structural unit derived from the monomer (c) (a structure including a single bond obtained by a reaction of the carbon-carbon double bond of the (meth)acryloyl group in the monomer (c)) is preferably 7.0 to 9.2 $(cal/cm^3)^{1/2}$, more preferably 7.3 to 8.8 $(cal/cm^3)^{1/2}$, from the viewpoint of base oil solubility.

Examples of the monomer (c) include (meth)acrylic acid alkyl esters having a C5-C700 alkyl group, esters of (meth)acrylic acid and an adduct of an alcohol containing a C5-C700 alkyl group with a C2-C4 alkylene oxide, and N-alkyl(meth)acrylamides having a C5-C700 alkyl group.

From the viewpoint of base oil solubility, the linear or branched C5-C700 alkyl group is preferably a linear or branched C10-C600 alkyl group, more preferably a linear or branched C12-C100 alkyl group, particularly preferably a linear or branched C16-C44 alkyl group, most preferably a linear C16-C32 alkyl group or a branched C18-C32 alkyl group.

Examples of the monomer (c) include pentyl (meth)acrylate, hexyl (meth)acrylate, n-octyl (meth)acrylate, 2-ethylhexyl (meth)acrylate, n-nonyl (meth)acrylate, isononyl (meth)acrylate, n-decyl (meth)acrylate, isodecyl (meth) acrylate, n-undecyl (meth)acrylate, isoundecyl (meth)acrylate, n-dodecyl (meth)acrylate, isododecyl (meth)acrylate, n-tridecyl (meth)acrylate, isotridecyl (meth)acrylate, n-tetradecyl (meth)acrylate, 2-ethyldodecyl (meth)acrylate, n-pentadecyl (meth)acrylate, 2-methyltetradecyl (meth)acrylate, n-hexadecyl (meth)acrylate, isohexadecyl (meth)acrylate, n-heptadecyl (meth)acrylate, isoheptadecyl (meth)acrylate, 2-ethylpentadecyl (meth)acrylate, 2-octylnonyl (meth)acrylate, 2-(3-methylhexyl)-7-methyl-nonyl (meth)acrylate, n-octadecyl (meth)acrylate, isooctadecyl (meth)acrylate, 2-hexylundecyl (meth)acrylate, 2-ethylheptadecyl (meth)acrylate, 1-hexyltridecyl (meth)acrylate, n-icosyl (meth)acrylate, 2-octylundecyl (meth)acrylate, isoicosyl (meth)acrylate, 1-undecyldodecyl (meth)acrylate, 1-octylpentadecyl (meth)acrylate, 2-decyltridecyl (meth)acrylate, n-tetraicosyl (meth)acrylate, 2-decyltetradecyl (meth)acrylate, 2-dodecylpentadecyl (meth) acrylate, 2-heptylicosyl (meth)acrylate, 2-dodecylhexadecyl (meth)acrylate, n-triacontyl (meth)acrylate, 2-tetradecyloctadecyl (meth)acrylate, n-hexatriacontyl (meth)acrylate, n-tetracontyl (meth)acrylate, and 2-ethyltetracontyl (meth)acrylate.

The copolymer (A) may contain a monomer that is different from the above-mentioned monomers as a constituent monomer, and may contain, for example, in addition to the monomers (a) to (c), one or more constituent monomers selected from the group consisting of a (meth)acryloyl monomer (d) having a C1-C4 alkyl group, a nitrogen-containing monomer (e), and a hydroxy group-containing monomer (f) that is different from the monomers (a) and (b).

Examples of the (meth)acryloyl monomer (d) having a C1-C4 alkyl group include methyl (meth)acrylate, ethyl (meth)acrylate, n-propyl (meth)acrylate, isopropyl (meth)acrylate, n-butyl (meth)acrylate, tert-butyl (meth)acrylate, sec-butyl (meth)acrylate, N-methyl (meth)acrylamide, N-ethyl (meth)acrylamide, N-propyl (meth)acrylamide, and N-butyl (meth)acrylamide.

From the viewpoints of anti-wear properties and a viscosity index improving effect, the (meth)acryloyl monomer (d) having a C1-C4 alkyl group is preferably a (meth)acrylate having a C1-C4 alkyl group, more preferably a (meth)acrylate having a linear C1-C4 alkyl group, particularly preferably methyl (meth)acrylate or butyl (meth)acrylate.

Examples of the nitrogen-containing monomer (e) include the following monomers (e1) to (e4).

Amide group-containing monomer (e1)

Examples include monomers in which a nitrogen atom is present only in an amide group including: (meth) acrylamide; monoalkylaminoalkyl (meth)acrylamides [those having an aminoalkyl group (C2-C6) in which one C1-C4 alkyl group is bonded to a nitrogen atom, e.g., N-methylaminoethyl (meth)acrylamide, N-ethylaminoethyl (meth)acrylamide, N-isopropylamino-n-butyl (meth)acrylamide, N-n-butylamino-n-butyl (meth)acrylamide and N-isobutylamino-n-butyl (meth) acrylamide]; dialkylamino(meth)acrylamides [those in which two C1-C4 alkyl groups are bonded to a nitrogen atom, e.g., N,N-dimethyl (meth)acrylamide, N,N-diethyl (meth)acrylamide, N,N-diisopropyl (meth)acrylamide, and N,N-di-n-butyl (meth)acrylamide]; dialkylaminoalkyl (meth)acrylamides [those having an aminoalkyl group (C2-C6) in which two C1-C4 alkyl groups are bonded to a nitrogen atom, e.g., N,N-dimethylaminoethyl (meth)acrylamide, N,N-diethylaminoethyl (meth)acrylamide, N,N-dimethylaminopropyl (meth)acrylamide, and N,N-di-n-butylaminobutyl (meth)acrylamide]; and N-vinylcarboxylic amides [e.g., N-vinylformamide, N-vinylacetamide, N-vinyl-propionamide and N-vinyl-isopropionylamide, and N-vinylhydroxyacetamide].

Nitro group-containing monomer (e2)

Examples include 4-nitrostyrene.

Primary to tertiary amino group-containing monomer (e3)

Examples include primary amino group-containing vinyl monomers {C3-C6 alkenylamines [e.g., (meth)allylamine and crotylamine], aminoalkyl (C2-C6) (meth)acrylates [aminoethyl (meth)acrylate, etc.]}; secondary amino group-containing vinyl monomers {monoalkylaminoalkyl (meth)acrylates [those having an aminoalkyl group (C2-C6) in which one C1-C6 alkyl group is bonded to a nitrogen atom, e.g., t-butylaminoethyl (meth)acrylate and methylaminoethyl (meth) acrylate], C6-C12 dialkenylamines [e.g., di(meth)allylamine]}; tertiary amino group-containing vinyl monomers {dialkylaminoalkyl (meth)acrylates [those having an aminoalkyl group (C2-C6) in which two C1-C6 alkyl groups are bonded to a nitrogen atom, e.g., N,N-dimethylaminoethyl (meth)acrylate and N,N-diethylaminoethyl (meth)acrylate]; nitrogen-containing alicyclic (meth)acrylates [e.g., morpholinoethyl (meth)acrylate]; aromatic vinyl monomers [e.g., N,N-diphenylaminoethyl (meth)acrylamide, N,N-dimethylaminostyrene, 4-vinylpyridine, 2-vinylpyridine, N-vinylpyrrole, N-vinylpyrrolidone, and N-vinylthiopyrrolidone]; and salts thereof such as hydrochlorides, sulfates, phosphates, and lower alkyl (C1-C8) monocarboxylic acid (e.g., acetic acid and propionic acid) salts.

Nitrile group-containing monomer (e4)

Examples include (meth)acrylonitrile.

Of these nitrogen-containing vinyl monomers (e), preferred are an amide group-containing monomer (e1) and a primary to tertiary amino group-containing monomer (e3), and more preferred are N,N-diphenylaminoethyl (meth) acrylamide, dimethylaminoethyl (meth)acrylamide, diethylaminoethyl (meth)acrylamide, dimethylaminopropyl (meth) acrylamide, N,N-dimethylaminoethyl (meth)acrylate, and N,N-diethylaminoethyl (meth)acrylate.

Specific examples of the hydroxy group-containing monomer (f) are as follows.

Examples include hydroxy group-containing aromatic monomers (e.g., p-hydroxystyrene), dihydroxyalkyl (C1-C4)-substituted (meth)acrylamides [e.g., N,N-dihydroxymethyl (meth)acrylamide, N,N-dihydroxypropyl (meth)acrylamide, and N,N-di-2-hydroxybutyl (meth)acrylamide], vinyl alcohol, C3-C12 alkenols [e.g., (meth)allyl alcohol, crotyl alcohol, isocrotyl alcohol, 1-octenol, and 1-undecenol], C4-C12 alkene monools or C4-C12 alkene diols [e.g., 1-buten-3-ol, 2-buten-1-ol, and 2-butene-1,4-diol], hydroxyalkyl (C1-C6) alkenyl (C3-C10) ethers (e.g., 2-hydroxyethyl propenyl ether), and alkenyl (C3-C10) ethers or (meth)acrylates of polyhydric alcohols (having 3 to 8 hydroxy groups) (e.g., glycerol, pentaerythritol, sorbitol, sorbitan, diglycerol, saccharides, and sucrose) [e.g., sucrose (meth)allyl ether].

The copolymer (A) may contain any of the following monomers (g) to (n) as constituent monomers.

Alkoxyalkyl ether monomer (g)

Examples include those different from the monomer (c) such as alkoxyalkyl (meth)acrylates having a C1-C4 alkyl group (e.g., methoxyethyl (meth)acrylate, methoxypropyl (meth)acrylate, methoxybutyl (meth)acrylate, methoxyheptyl (meth)acrylate, methoxyhexyl (meth)acrylate, methoxypentyl (meth)acrylate, methoxyoctyl (meth)acrylate, ethoxyethyl (meth)acrylate, ethoxypropyl (meth)acrylate, ethoxybutyl (meth)acrylate, ethoxyheptyl (meth)acrylate, ethoxyhexyl (meth)acrylate, ethoxypentyl (meth)acrylate, ethoxyoctyl (meth)acrylate, propoxymethyl (meth)acrylate, propoxyethyl (meth)acrylate, propoxypropyl (meth)acrylate, propoxybutyl (meth)acrylate, propoxyheptyl (meth)acrylate, propoxyhexyl (meth)acrylate, propoxypentyl (meth)acrylate, propoxyoctyl (meth)acrylate, butoxymethyl (meth)acrylate, butoxyethyl (meth)acrylate, butoxypropyl (meth)acrylate, butoxybutyl (meth)acrylate, butoxyheptyl (meth)acrylate, butoxyhexyl (meth)acrylate, butoxypentyl (meth)acrylate, and butoxyoctyl (meth)acrylate).

Of these monomers (g), preferred are methoxyethyl (meth)acrylate, ethoxyethyl (meth)acrylate, and butoxyethyl (meth)acrylate.

Aliphatic hydrocarbon monomer (h)

Examples include C2-C20 alkenes (e.g., ethylene, propylene, butene, isobutylene, pentene, heptene, diisobutylene, octene, dodecene, and octadecene) and C4-C12 alkadienes (e.g., butadiene, isoprene, 1,4-pentadiene, 1,6-heptadiene, and 1,7-octadiene).

Alicyclic hydrocarbon monomer (i)

Examples include cyclohexene, (di)cyclopentadiene, pinene, limonene, vinylcyclohexene, and ethylidenebicycloheptene.

Aromatic hydrocarbon monomer (j)

Examples include styrene, $\alpha$-methylstyrene, vinyltoluene, 2,4-dimethylstyrene, 4-ethylstyrene, 4-isopropylstyrene, 4-butylstyrene, 4-phenylstyrene, 4-cyclohexylstyrene, 4-benzylstyrene, indene, 4-crotylbenzene, and 2-vinylnaphthalene.

Vinyl esters, vinyl ethers, vinyl ketones (k)

Examples include vinyl esters of C2-C12 saturated fatty acids (e.g., vinyl acetate, vinyl propionate, vinyl butyrate, and vinyl octanoate), C1-C12 alkyl, aryl, or alkoxyalkyl vinyl ethers (e.g., methyl vinyl ether, ethyl vinyl ether, propyl vinyl ether, butyl vinyl ether, 2-ethylhexyl vinyl ether, phenyl vinyl ether, vinyl-2-methoxyethyl ether, and vinyl-2-butoxyethyl ether), and C1-C8 alkyl or aryl vinyl ketones (e.g., methyl vinyl ketone, ethyl vinyl ketone, and phenyl vinyl ketone).

Epoxy group-containing monomer (l)

Examples include glycidyl (meth)acrylate and glycidyl (meth)allyl ether.

Halogen-containing monomer (m)

Examples include vinyl chloride, vinyl bromide, vinylidene chloride, (meth)allyl chloride, and halogenated styrenes (e.g., dichlorostyrene).

Ester of unsaturated polycarboxylic acid (n)

Examples include alkyl, cycloalkyl, or aralkyl esters of unsaturated polycarboxylic acids [C1-C8 alkyl diesters of unsaturated dicarboxylic acids (e.g., maleic acid, fumaric acid, and itaconic acid) (dimethyl maleate, dimethyl fumarate, diethyl maleate, and dioctyl maleate)].

From the viewpoint of anti-wear properties, the weight percentage of the monomer (a) among the copolymer (A)-constituting monomers is preferably 12.5 to 50% by weight, more preferably 20 to 45% by weight, particularly preferably 25 to 40% by weight, based on the total weight of the copolymer (A)-constituting monomers.

From the viewpoint of anti-wear properties, the weight percentage of the monomer (b) among the copolymer (A)-constituting monomers is preferably 0.08 to 2.7% by weight, more preferably 0.4 to 1.9% by weight, particularly preferably 0.5 to 1.5% by weight, based on the total weight of the copolymer (A)-constituting monomers.

From the viewpoint of anti-wear properties, the percentage of the total weight of the monomer (a) and the monomer (b) among the copolymer (A)-constituting monomers is preferably 13 to 52% by weight, more preferably 20.5 to 46% by weight, particularly preferably 26 to 41% by weight, based on the total weight of the copolymer (A)-constituting monomers.

The weight ratio (b/a) of the monomer (b) to the monomer (a) among the copolymer (A)-constituting monomers is 0.0005 to 0.12, preferably 0.02 to 0.064, more preferably 0.03 to 0.055, particularly preferably 0.03 to 0.045.

If the weight ratio is less than 0.0005, the anti-wear effect is not obtained, whereas if it is more than 0.12, the anti-wear effect is insufficient.

From the viewpoint of solubility, the weight percentage of the monomer (c) among the copolymer (A)-constituting monomers is preferably 48 to 87% by weight, more preferably 54 to 80% by weight, still more preferably 54 to 72% by weight, particularly preferably 59 to 72% by weight, based on the total weight of the copolymer (A)-constituting monomers.

From the viewpoint of anti-wear properties, the percentage of the weight of the monomer (d) among the copolymer (A)-constituting monomers is preferably 0 to 30% by weight, more preferably 5 to 15% by weight, based on the total weight of the copolymer (A)-constituting monomers.

From the viewpoint of anti-wear properties, the percentage of the total weight of the monomers (e) and (f) among the copolymer (A)-constituting monomers is preferably 20% by weight or less, more preferably 10% by weight or less, based on the total weight of the copolymer (A)-constituting monomers.

From the viewpoint of anti-wear properties, the percentage of the total weight of the monomers (g) to (n) among the copolymer (A)-constituting monomers is preferably 10% by weight or less, more preferably 7% by weight or less, based on the total weight of the copolymer (A)-constituting monomers.

The weight percentage of each of the monomers (a) to (n) in the copolymer (A) can be measured by a method such as pyrolysis GC/MS. The weight percentage of each of the constituent monomers used in the production of the copolymer (A) may be regarded as the weight percentage of each of the monomers (a) to (n) in the copolymer (A).

From the viewpoint of base oil solubility, the SP value of the copolymer (A) is preferably 8.5 to 11.5 $(cal/cm^3)^{1/2}$, more preferably 8.7 to 11.0 $(cal/cm^3)^{1/2}$, still more preferably 8.9 to 10.5 $(cal/cm^3)^{1/2}$, particularly preferably 9.2 to 10.2 $(cal/cm^3)^{1/2}$.

The SP value of the copolymer (A) refers to the arithmetic mean of the SP values, which are calculated using the SP value calculation method described above, of the structural units derived from the copolymer (A)-constituting monomers determined based on the weight fractions of the constituent monomers used in the production (Each structural unit has a structure including a single bond obtained by a polymerization reaction of the polymerizable group (e.g., a vinyl group) of the corresponding monomer constituting the copolymer (A).). For example, in the case of a methyl methacrylate

monomer, a structural unit derived from methyl methacrylate consists of two $CH_3$ groups, one $CH_2$ group, one C atom, and one $CO_2$ group. Thus, the SP value of the structural unit derived from methyl methacrylate is found to be 9.933 $(cal/cm^3)^{1/2}$ from the following equations. Similarly, the SP value of a structural unit derived from ethyl methacrylate is calculated to be 9.721 $(cal/cm^3)^{1/2}$,

$$\Sigma\Delta ei = 1125 \times 2 + 1180 + 350 + 4300 = 8080$$

$$\Sigma vi = 33.5 \times 2 + 16.1 - 19.2 + 18.0 = 81.9$$

$$\delta = (8080/81.9)1/2 = 9.933\ (cal/cm^3)^{1/2}$$

In the case of a polymer including 50% by weight methyl methacrylate and 50% by weight ethyl methacrylate, the SP value of the polymer is determined by calculating the arithmetic mean of the SP values of the structural units derived from the monomers of the polymer based on the weight fractions as described below.

SP value of polymer = $(9.933 \times 50 + 9.721 \times 50)/100 = 9.827$

The SP value of the copolymer (A) can be adjusted to fall within a desired range by appropriately adjusting the monomers to be used and their weight fractions. Specifically, the SP value can be decreased by using many monomers having a long carbon chain alkyl group, and the SP value can be increased by using many monomers having a short carbon chain alkyl group.

The weight average molecular weight (hereinafter abbreviated as Mw) of the copolymer (A) is preferably 5,000 to 500,000, more preferably 10,000 to 150,000, from the viewpoint of anti-wear properties.

The Mw can be measured by gel permeation chromatography under the following conditions.

<Conditions for measuring Mw of copolymer (A)>

Apparatus: "HLC-8320GPC" (Tosoh Corporation)
Column: "Guardcolumn Super HZM-M" (Tosoh Corporation), a single column, "TSKgel Super HZM-M" (Tosoh Corporation), three columns
Measurement temperature: 40°C
Sample solution: a 0.25% by weight tetrahydrofuran solution
Amount of solution to be injected: 100 μl
Detector: Refractive index detector
Reference material: 12 types of standard polystyrene (TSKstandard POLYSTYRENE) (molecular weight: 500, 1,050, 2,800, 5,970, 9,100, 18,100, 37,900, 96,400, 190,000, 355,000, 1,090,000, 2,890,000) (Tosoh Corporation)

The copolymer (A) can be obtained by a known production method. Specifically, the copolymer (A) can be obtained by solution polymerization of the monomers in a solvent in the presence of a polymerization catalyst.

Examples of the solvent include toluene, xylene, C9-C10 alkylbenzenes, methyl ethyl ketone, ethyl acetate, 2-propanol, and base oils, which are described below.

Examples of the polymerization catalyst include azo catalysts (e.g., azobisisobutyronitrile and azobisvaleronitrile), peroxide catalysts (e.g., benzoyl peroxide, cumyl peroxide, and lauryl peroxide), and redox catalysts (e.g., a mixture of benzoyl peroxide and a tertiary amine). A known chain transfer agent (e.g., C2-C20 alkylmercaptans) can also be used, if necessary.

The polymerization temperature is preferably 25°C to 140°C, more preferably 50°C to 120°C. The copolymer (A) can be obtained by bulk polymerization, emulsion polymerization, or suspension polymerization as well as by solution polymerization.

The polymerization form of the copolymer (A) may be either a random addition polymer or an alternating copolymer, and may be either a graft copolymer or a block copolymer.

It suffices that the anti-wear agent of the present invention contains the copolymer (A). It may further contain a base oil from the viewpoint of handleability (ease of addition to a lubricating oil composition, etc.).

Examples of the base oil include mineral oils (e.g., solvent refined oils, paraffin oils, high viscosity index oils containing isoparaffin, high viscosity index oils obtained by hydrocracking isoparaffin, and naphthenic oils), synthetic lubricating oils (e.g., hydrocarbon-based synthetic lubricating oils, such as poly-α-olefin-based synthetic lubricating oils,

and ester-based synthetic lubricating oils), and mixtures thereof. Of these, mineral oils are preferred from the viewpoint of insulating properties.

From the viewpoint of handleability (ease of addition to a lubricating oil composition, etc.), the amount of the copolymer (A) in the anti-wear agent is preferably 20 to 80% by weight, more preferably 40 to 70% by weight, based on the weight of the anti-wear agent.

From the viewpoint of handleability (ease of addition to a lubricating oil composition, etc.), the amount of the base oil in the anti-wear agent is preferably 20 to 80% by weight, more preferably 30 to 60% by weight, based on the weight of the anti-wear agent.

The anti-wear agent of the present invention can have both anti-wear properties and storage stability, and is therefore suitable for use in oils such as gear oils (differential oils, industrial gear oils, etc.), MTFs, transmission oils (ATFs, belt-CVTFs, etc.), traction oils (toroidal-CVTFs, etc.), shock absorber oils, power steering oils, hydraulic oils (construction machinery hydraulic oils, industrial hydraulic oils, etc.), and engine oils. The anti-wear agent of the present invention is preferably used as an anti-wear agent for transmission oils, electric motor oils, and multi-purpose oils for both transmissions and electric motors in electric vehicles or hybrid vehicles, and is particularly preferably used as an anti-wear agent for multi-purpose oils for both transmissions and electric motors in electric vehicles or hybrid vehicles.

<Lubricating oil composition>

The lubricating oil composition of the present invention contains the anti-wear agent of the present invention and a base oil. When the anti-wear agent contains a base oil, the base oil in the lubricating oil composition may be the same as or different from the base oil in the anti-wear agent.

Examples of the base oil in the lubricating oil composition include mineral oils (e.g., solvent refined oils, paraffin oils, high viscosity index oils containing isoparaffin, high viscosity index oils obtained by hydrocracking isoparaffin, and naphthenic oils), synthetic lubricating oils (e.g., hydrocarbon-based synthetic lubricating oils, such as poly-$\alpha$-olefin-based synthetic lubricating oils, and ester-based synthetic lubricating oils), and mixtures thereof. Of these, mineral oils are preferred from the viewpoint of insulating properties.

The kinematic viscosity at 100°C of the base oil (measured according to JIS-K 2283 (2000)) is preferably 1 to 10 $mm^2/s$, more preferably 1 to 4 $mm^2/s$, from the viewpoint of the solubility of the copolymer (A).

The viscosity index of the base oil (measured according to JIS-K 2283 (2000)) is preferably 100 or more, more preferably 110 or more, from the viewpoint of a viscosity index improving effect.

The cloud point of the base oil (measured according to JIS-K 2269 (1987)) is preferably -5°C or lower, more preferably -15°C or lower. The base oil having a cloud point within this range can provide a lubricating oil composition with good low-temperature viscosity.

From the viewpoint of compatibility, the absolute value of the difference between the SP value of the copolymer (A) and the SP value of the base oil in the lubricating oil composition ($\Delta$SP) is preferably 0.5 to 3.2 $(cal/cm^3)^{1/2}$, more preferably 0.6 to 2.5 $(cal/cm^3)^{1/2}$, particularly preferably 0.6 to 2.1 $(cal/cm^3)^{1/2}$, most preferably 0.7 to 1.9 $(cal/cm^3)^{1/2}$.

The amount of the copolymer (A) in the lubricating oil composition of the present invention is preferably 0.1 to 30% by weight, more preferably 0.1 to 20% by weight, particularly preferably 0.1 to 10% by weight, based on the weight of the lubricating oil composition, from the viewpoint of anti-wear properties.

The lubricating oil composition of the present invention may have a maximum non-seizure load (N) of 750 N or higher, measured in accordance with ASTM D 2783, except for the test conditions described below.

<Measurement conditions>

Apparatus: KRL & Four-ball tester available from Space Creation Co., Ltd.
Balls: steel balls for four ball bearings, size: 1/2 Speed: 1760 rpm
Temperature: 25°C
Test duration for each run: 10 seconds
Initial test load: 500 N
Load increase interval: 10 N

The lubricating oil composition of the present invention may be a lubricating oil composition for use under high load conditions, such as 750 N or higher.

The lubricating oil composition of the present invention is suitable for use in oils such as gear oils (differential oils, industrial gear oils, etc.), MTFs, transmission oils (ATFs, belt-CVTFs, etc.), traction oils (toroidal-CVTFs, etc.), shock absorber oils, power steering oils, hydraulic oils (construction machinery hydraulic oils, industrial hydraulic oils, etc.), and

engine oils. The lubricating oil composition of the present invention is preferably useful as transmission oils, electric motor oils, and multi-purpose oils for both transmissions and electric motors in electric vehicles or hybrid vehicles, and is particularly preferably useful as multi-purpose oils for both transmissions and electric motors in electric vehicles or hybrid vehicles.

The lubricating oil composition of the present invention may contain various additives. Examples of the additives are as follows.

(1) Viscosity index improver

Examples include an alkyl (meth)acrylate having a number of carbon atoms (hereinafter sometimes abbreviated as C) of 1 to 7/(C8-40) linear or branched alkyl (meth)acrylate copolymer, a dispersing monomer (amine monomer, etc.)/(C1-7) alkyl (meth)acrylate/(C8-40) linear or branched alkyl (meth)acrylate copolymer, a hydroxy group-containing monomer/(C1-7) alkyl (meth)acrylate/(C8-40) linear or branched alkyl (meth)acrylate copolymer, a comb-type polymer (a (C1-7) alkyl (meth)acrylate/(C8-40) linear or branched alkyl (meth)acrylate/polyolefin macromonomer), an ethylene/(C1-18) alkyl (meth)acrylate copolymer, polyisobutylene, a polyalkylstyrene, an ethylene/propylene copolymer, a styrene/maleic acid ester copolymer, and a styrene/isoprene hydrogenated copolymer.

(2) Detergent

Examples include basic, overbased, or neutral metal salts (e.g., overbased metal salts or alkaline earth metal salts of sulfonates such as petroleum sulfonates, alkylbenzene sulfonates, and alkylnaphthalene sulfonates), salicylates, phenates, naphthenates, carbonates, phosphonates, and mixtures of these.

(3) Dispersant

Examples include succinimides (bis- or mono-polybutenyl succinimides), Mannich condensates, and borates.

(4) Antioxidant

Examples include hindered phenols and aromatic secondary amines.

(5) Oiliness improver

Examples include long-chain fatty acids and their esters (e.g., oleic acid and oleate), long-chain amines and their amides (e.g., oleylamine and oleylamide).

(6) Metal-based friction and wear modifier

Examples include molybdenum-based compounds and zinc-based compounds (e.g., molybdenum dithiophosphate, molybdenum dithiocarbamate, and zinc dialkyldithiophosphates).

(7) Extreme pressure agent

Examples include sulfur compounds (mono- or disulfide, sulfoxide, and sulfur phosphide compounds), phosphide compounds, and chlorine compounds (e.g., chlorinated paraffin).

(8) Defoamer

Examples include silicone oils, metallic soap, fatty acid esters, and phosphate compounds.

(9) Demulsifier

Examples include quaternary ammonium salts (e.g., tetraalkyl ammonium salts), sulfonated oil, and phosphates (e.g., phosphates of polyoxyethylene-containing nonionic surfactants) .

(10) Corrosion inhibitor

Examples include nitrogen-containing compounds (e.g., benzotriazole and 1,3,4-thiadiazolyl -2,5-bisdialkyldithiocarbamates).

(11) Pour point depressant

Examples include polyalkyl methacrylates, polyalkyl acrylates, polyalkyl styrenes, and polyvinyl acetate.

The lubricating oil composition of the present invention preferably contains at least one selected from the group consisting of a viscosity index improver, a detergent, a dispersant, an antioxidant, an oiliness improver, a metal-based friction and wear modifier, an extreme pressure agent, a defoamer, an anti-emulsifier, a corrosion inhibitor, and a pour point depressant. The lubricating oil composition may contain only one of these additives or may contain two or more additives if needed.

The amount of each of these additives is preferably 0.1 to 15% by weight based on the total amount of the lubricating oil composition. The total amount of the additives is preferably 0.1 to 30% by weight, more preferably 0.3 to 20% by weight, still more preferably 3 to 10% by weight based on the total amount of the lubricating oil composition.

The following matters are disclosed herein.

The disclosure (1) relates to an anti-wear agent containing a copolymer (A) that contains, as essential constituent monomers:

a monomer (a) represented by the following formula (1); and
a monomer (b) represented by the following formula (2),
a weight ratio (b/a) of the monomer (b) to the monomer (a) in the copolymer (A) being 0.0005 to 0.12, the formula (1) being as follows:

[Chem. 6]

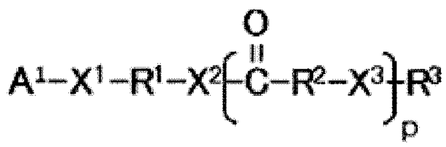

(1)

wherein $A^1$ is a polymerizable group; $-X^1-$, $-X^2-$, and $-X^3-$are each independently a group represented by -O- or -NH-; $R^1$ is a C1-C4 alkylene group; $R^2$ is a C2-C20 alkylene group; $R^3$ is a hydrogen atom, a linear or branched C1-C44 alkyl group, a phenyl group having a linear or branched C1-C44 alkyl group, an acyl group having a linear or branched C1-C44 alkyl group, or a benzoyl group having a linear or branched C1-C44 alkyl group; and p is an integer of 1 to 100, where when p is 2 or more, a plurality of $R^2$'s are the same as or different from each other and a plurality of $X^3$'s are the same as or different from each other, the formula (2) being as follows:

[Chem. 7]

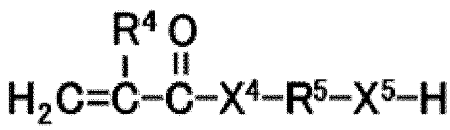

(2)

wherein $R^4$ is a hydrogen atom or a methyl group; $-X^4-$ is a group represented by -O- or -NH-; $R^5$ is a C1-C4 alkylene group; and $-X^5-$ is a group represented by -O- or -NH-.

The disclosure (2) relates to the anti-wear agent according to the disclosure (1),
wherein the copolymer (A) comprises as a constituent monomer a monomer (c) represented by the following formula (3):

[Chem. 8]

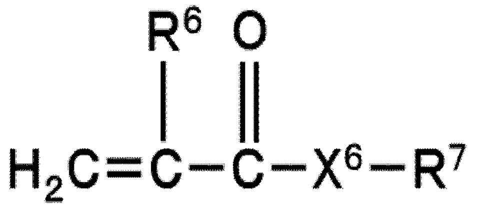
(3)

wherein $R^6$ is a hydrogen atom or a methyl group; $-X^6-$ is a group represented by -O-, $-O(AO)_m-$, or -NH-, where A is a C2-C4 alkylene group and m is an integer of 1 to 10, where when m is 2 or more, a plurality of As are the same as or different from each other; and $R^7$ is a linear or branched C5-C700 alkyl group.

The disclosure (3) relates to the anti-wear agent according to the disclosure (1) or (2), wherein the copolymer (A) has a weight average molecular weight of 5,000 to 500,000.

The disclosure (4) relates to a lubricating oil composition containing:

the anti-wear agent according to any one of the disclosures (1) to (3); and
a base oil.

The disclosure (5) relates to the lubricating oil composition according to the disclosure (4), wherein the base oil has a kinematic viscosity at 100°C of 1 to 4 $mm^2/s$.

The disclosure (6) relates to the lubricating oil composition according to the disclosure (4) or (5), further comprising at least one selected from the group consisting of a viscosity index improver, a detergent, a dispersant, an antioxidant, an oiliness improver, a metal-based friction and wear modifier, an extreme pressure agent, a defoamer, an anti-emulsifier, a corrosion inhibitor, and a pour point depressant.

EXAMPLES

The present invention is described in detail below with reference to examples, but the present invention is not limited to these examples.

<Production Example 1> (Production of Monomer (a-1))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (hereinafter abbreviated as HEMA), 684.8 parts by weight (6.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 100 mol%).

A monomer (a-1) is a monomer represented by the formula (1) in which A1 is a methacryloyl group, $-X^1-$, $-X^2-$, and $-X^3-$ are groups represented by -O-, $R^1$ is an ethylene group, the molar average value of p is 3, $R^2$ is a pentylene group, and $R^3$ is a hydrogen atom. The monomer (a-1) has a SP value of 11.04.

<Production Example 2> (Production of Monomer (a-2))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (HEMA), 913.2 parts by weight (8.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 100 mol%).

A monomer (a-2) is a monomer represented by the formula (1) in which A1 is a methacryloyl group, $-X^1-$, $-X^2-$, and $-X^3-$ are groups represented by -O-, $R^1$ is an ethylene group, the molar average value of p is 4, $R^2$ is a pentylene group, and $R^3$ is a hydrogen atom. The monomer (a-2) has a SP value of 10.87.

<Production Example 3> (Production of Monomer (a-3))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (HEMA), 228.3 parts by weight (2.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 53 mol%). Thereafter, 47 mol% of 2-hydroxyethyl methacrylate (HEMA) remaining as an impurity was removed by silica column chromatography.

A monomer (a-3) is a monomer represented by the formula (1) in which A1 is a methacryloyl group, -$X^1$-, - $X^2$-, and -$X^3$- are groups represented by -O-, $R^1$ is an ethylene group, the molar average value of p is 1.9, $R^2$ is a pentylene group, and $R^3$ is a hydrogen atom. The monomer (a-3) has a SP value of 11.36.

<Production Example 4> (Production of Monomer (a-4))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 232.2 parts by weight (2.0 parts by mole) of 2-hydroxyethyl acrylate (hereinafter abbreviated as HEA), 456.6 parts by weight (4.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 76 mol%). Thereafter, 24 mol% of 2-hydroxyethyl acrylate (HEA) remaining as an impurity was removed by silica column chromatography.

A monomer (a-4) is a monomer represented by the formula (1) in which $A^1$ is an acryloyl group, -$X^1$-, -$X^2$-, and -$X^3$- are groups represented by -O-, $R^1$ is an ethylene group, the molar average value of p is 2.6, $R^2$ is a pentylene group, and $R^3$ is a hydrogen atom. The monomer (a-4) has a SP value of 11.30.

<Production Example 5> (Production of Monomer (a-5))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (HEMA), 1141.5 parts by weight (10.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 100 mol%).

A monomer (a-5) is a monomer represented by the formula (1) in which $A^1$ is a methacryloyl group, -$X^1$-, -$X^2$-, and -$X^3$- are groups represented by -O-, $R^1$ is an ethylene group, the molar average value of p is 5, $R^2$ is a pentylene group, and $R^3$ is a hydrogen atom. The monomer (a-5) has a SP value of 10.75.

<Production Example 6> (Production of Monomer (a-6))

A mixture containing 54.3 parts by weight (10 parts by mole) of the monomer (a-2) obtained by the method described in Production Example 2, 18.5 parts by weight (10 parts by mole) of lauric acid, and 350 parts by weight of dichloromethane was stirred at 0°C. Then, 5.6 parts by weight (5 parts by mole) of 4-dimethylaminopyridine and 21.5 parts by weight (15 parts by mole) of 1-ethyl-3-(3-dimethylaminopropyl)carbodiimide were added thereto, and the mixture was warmed to room temperature and stirred overnight in that state. The reaction liquid was washed with 1 N hydrochloric acid, an aqueous sodium hydrogen carbonate solution, and brine, and the organic layer was then dried over magnesium sulfate. The solvent was then removed and the product was further dried under vacuum to obtain a monomer (a-6).

The monomer (a-6) is a monomer represented by the formula (1) in which $A^1$ is a methacryloyl group, -$X^1$-, -$X^2$-, and -$X^3$- are groups represented by -O-, $R^1$ is an ethylene group, the molar average value of p is 4, $R^2$ is a pentylene group, and $R^3$ is a dodecanoyl group. The monomer (a-6) has a SP value of 9.68.

<Production Example 7> (Production of Monomer (a-7))

A reaction vessel equipped with a temperature controller, a stirring blade, a vacuum apparatus, a Dimroth condenser, a fractionating column, a distillate receiving flask, and a nitrogen inlet, and a nitrogen outlet was charged with

232.2 parts by weight (2.0 parts by mole) of 2-hydroxyethyl acrylate (hereinafter abbreviated as HEA), 2283.0 parts by weight (20.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 100 mol%).

A monomer (a-7) is a monomer represented by the formula (1) in which $A^1$ is an acryloyl group, $-X^1-$, $-X^2-$, and $-X^3-$ are groups represented by -O-, $R^1$ is an ethylene group, the molar average value of p is 10, $R^2$ is a pentylene group, and $R^3$ is a hydrogen atom. The monomer (a-7) has a SP value of 10.68.

<Production Example 8> (Production of Monomer (a-8))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (HEMA), 4566.0 parts by weight (40.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. The contents were cooled to 25°C, and an esterified product was confirmed by $^1$H-NMR (yield: 100 mol%).

A monomer (a-8) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 20, $R^2$ is a pentylene group, and $R^3$ is a hydrogen atom. The monomer (a-8) has a SP value of 11.32.

<Production Example 9> (Production of Monomer (a-9))

A mixture containing 60.6 parts by weight (10 parts by mole) of the monomer (a-2) obtained by the method described in Production Example 2, 9.1 parts by weight (10 parts by mole) of n-butanoic acid, and 350 parts by weight of dichloromethane was stirred at 0°C. Then, 6.3 parts by weight (5 parts by mole) of 4-dimethylaminopyridine and 24.0 parts by weight (15 parts by mole) of 1-ethyl-3-(3-dimethylaminopropyl)carbodiimide were added thereto, and the mixture was warmed to room temperature and stirred overnight in that state. The reaction liquid was washed with 1 N hydrochloric acid, an aqueous sodium hydrogen carbonate solution, and brine, and the organic layer was then dried over magnesium sulfate. The solvent was then removed and the product was further dried under vacuum to obtain a monomer (a-9).

The monomer (a-9) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 4, $R^2$ is a pentylene group, and $R^3$ is a butanoyl group. The monomer (a-9) has a SP value of 9.96.

<Production Example 10> (Production of Monomer (a-10))

A reaction vessel equipped with a temperature controller, a stirring blade, a vacuum apparatus, a Dimroth condenser, a fractionating column, a distillate receiving flask, and a nitrogen inlet, and a nitrogen outlet was charged with 260.3 parts by weight (2.0 parts by mole) of 2-hydroxyethyl methacrylate (HEMA), 1598.1 parts by weight (14.0 parts by mole) of ε-caprolactone, 3.7 parts by weight (0.03 parts by mole) of hydroquinone monomethyl ether, and 0.27 parts by weight of butyltris(2-ethylhexanoyloxy)tin, and the temperature was raised to 115°C under stirring while introducing air. Then, the reaction was performed at 115°C for eight hours, and a distilled water was separated. Then, the reaction product was cooled to 25°C to obtain a monomer (a'-10) which was a precursor of the monomer (a-10).

The monomer (a'-10) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 7, $R^2$ is a pentylene group, and $R^3$ is a hydrogen atom.

A mixture containing 70.9 parts by weight (10 parts by mole) of the monomer (a'-10), 6.7 parts by weight (10 parts by mole) of n-butanoic acid, and 350 parts by weight of dichloromethane was stirred at 0°C. Then, 4.7 parts by weight (5 parts by mole) of 4-dimethylaminopyridine and 17.8 parts by weight (15 parts by mole) of 1-ethyl-3-(3-dimethylaminopropyl)carbodiimide were added thereto, and the mixture was warmed to room temperature and stirred overnight in that state. The reaction liquid was washed with 1 N hydrochloric acid, an aqueous sodium hydrogen carbonate solution, and brine, and the organic layer was then dried over magnesium sulfate. The solvent was then removed and the product was further dried under vacuum to obtain a monomer (a-10).

The monomer (a-10) is a monomer represented by the formula (1) in which $A^1$ is a methacryloyl group, $-X^1-$, $-X^2-$, and $-X^3-$ are groups represented by -O-, $R^1$ is an ethylene group, the molar average value of p is 7, $R^2$ is a pentylene group, and $R^3$ is a butanoyl group. The monomer (a-10) has a SP value of 10.40.

<Examples 1 to 25 and Comparative Examples 1 to 4>

A reaction vessel equipped with a stirrer, a heating-cooling device, a thermometer, and a nitrogen inlet tube was charged with 185 parts by weight of ethyl acetate, 100 parts by weight of a composition of the corresponding monomers shown in Tables 2 and 3, and dodecyl mercaptan, 2,2'-azobis(2,4-dimethylvaleronitrile), and 2,2'-azobis(2-methylbutyronitrile) each as an initiator or a chain transfer agent in the amounts shown in Tables 2 and 3. Then, the vessel was purged with nitrogen (gas phase oxygen concentration: 100 ppm) and sealed. The temperature was raised to 76°C with stirring, and a polymerization reaction was performed at the same temperature for six hours.

To the vessel was added 43 parts by weight of a mineral oil (SP value: 8.3 $(cal/cm^3)^{1/2}$, kinematic viscosity at 100°C: 4.2 $mm^2/s$, viscosity index: 122), and the temperature was raised to 120°C to 130°C. Thereafter, unreacted monomers and ethyl acetate were removed at the same temperature under reduced pressure (0.027 to 0.040 MPa) over two hours. Thus, anti-wear agents (A-1) to (A-25) of the present invention each containing 70% by weight of a copolymer, and comparative anti-wear agents (B-1) to (B-4) were obtained.

[Table 2]

| | | Copolymer (A) | structural unit | A-1 | A-2 | A-3 | A-4 | A-5 | A-6 | A-7 | A-8 | A-9 | A-10 | A-11 | A-12 | A-13 | A-14 | A-15 | A-16 |
|---|---|---|---|---|---|---|---|---|---|---|---|---|---|---|---|---|---|---|---|
| Formulation of monomers (parts by weight) | Monomer (a) | (a-1) Adduct of HEMA with ε-caprolactone (3 mol) | 11.04 | 30.9 | 30.9 | 27.2 | 31.7 | 30.9 | 28.0 | 32.6 | 30.9 | - | - | - | - | - | - | - | - |
| | | (a-2) Adduct of HEMA with ε-caprolactone (4 mol) | 10.87 | - | - | - | - | - | - | - | - | 50.0 | 31.0 | 31.0 | - | - | - | - | - |
| | | (a-3) Adduct of HEMA with ε-caprolactone (1.9 mol) | 11.36 | - | - | - | - | - | - | - | - | - | - | - | 42.3 | 42.3 | - | - | - |
| | | (a-4) Adduct of HEA with ε-caprolactone (2.6 mol) | 11.30 | - | - | - | - | - | - | - | - | - | - | - | - | - | 35.1 | 35.1 | - |
| | | (a-5) Adduct of HEMA with ε-caprolactone (5 mol) | 10.75 | - | - | - | - | - | - | - | - | - | - | - | - | - | - | - | 19.6 |
| | | (a-6) Dodecyl-terminated ester of adduct of HEMA with ε-caprolactone (4 mol) | 9.68 | - | - | - | - | - | - | - | - | - | - | - | - | - | - | - | - |
| | | (a-7) Adduct of HEA with ε-caprolactone (10 mol) | 10.68 | - | - | - | - | - | - | - | - | - | - | - | - | - | - | - | - |
| | | (a-8) Adduct of HEMA with ε-caprolactone (20 mol) | 11.32 | - | - | - | - | - | - | - | - | - | - | - | - | - | - | - | - |
| | | (a-9) Butyl-terminated ester of adduct of HEMA with ε-caprolactone (4 mol) | 9.96 | - | - | - | - | - | - | - | - | - | - | - | - | - | - | - | - |
| | | (a-10) Butyl-terminated ester of HEMA with ε-caprolactone (7 mol) | 10.40 | - | - | - | - | - | - | - | - | - | - | - | - | - | - | - | - |
| | Monomer (b) | (b-1) 2-Hydroxyethyl acrylate | 14.48 | - | - | - | - | - | - | - | - | - | - | - | - | - | 1.9 | 1.9 | - |
| | | (b-2) 2-Hydroxyethyl methacrylate | 13.47 | 1.1 | 1.1 | 0.8 | 1.3 | 1.1 | 1.0 | 1.4 | 1.1 | 2.0 | 1.0 | 1.0 | 2.7 | 2.7 | - | - | 0.4 |
| | | (b-3) 2-Hydroxy-2-methylpropyl methacrylate | 12.08 | - | - | - | - | - | - | - | - | - | - | - | - | - | - | - | - |
| | Monomer (c) | (c-1) Methacrylic acid ester of Neodol 23 | 8.95 | - | - | - | - | - | - | - | - | - | - | - | - | - | - | - | - |
| | | (c-2) n-Hexadecyl methacrylate | 8.93 | - | - | - | - | - | - | - | - | - | - | - | - | - | - | - | - |
| | | (c-3) n-Octadecyl methacrylate | 8.9 | - | - | - | - | - | - | - | - | - | - | - | - | - | - | - | - |
| | | (c-4) 2-Decyltetradecyl methacrylate | 8.77 | - | - | - | - | 10.0 | 61.0 | - | - | - | - | - | - | - | 30.0 | 30.0 | 80.0 |
| | | (c-5) 2-Dodecylhexadecyl methacrylate | 8.75 | 29.0 | 29.0 | - | - | 24.0 | - | 30.5 | 29.0 | - | 29.0 | 29.0 | 27.5 | 27.5 | - | - | - |
| | | (c-6) 2-Tetradecyloctadecyl methacrylate | 8.72 | 29.0 | 29.0 | 52.0 | 37.0 | 24.0 | - | 30.5 | 29.0 | 15.0 | 29.0 | 29.0 | 27.5 | 27.5 | 25.0 | 25.0 | - |
| | | (c-7) n-Dodecyl acrylate | 9.15 | - | - | - | - | - | - | - | - | - | - | - | - | - | - | - | - |
| | | (c-8) n-Octadecyl acrylate | 8.99 | - | - | - | - | - | - | - | - | - | - | - | - | - | - | - | - |
| | | (c-9) Polybutadiene macromonomer | 8.41 | - | - | - | - | - | - | - | - | 16.5 | - | - | - | - | - | - | - |
| | | (c-10) Polybutadiene macromonomer | 8.33 | - | - | - | - | - | - | - | - | 16.5 | - | - | - | - | - | - | - |
| | Monomer (d) | (d-1) Methyl methacrylate | 9.93 | - | - | 20.0 | - | - | - | - | - | - | - | - | - | - | 8.0 | 8.0 | - |
| | | (d-2) n-Butyl methacrylate | 9.45 | 10.0 | 10.0 | - | 30.0 | 10.0 | 10.0 | - | - | - | 10.0 | 10.0 | - | - | - | - | - |
| | Nitrogen-containing monomer (e) | (e-1) N,N-dimethylaminoethyl methacrylate | 9.52 | - | - | - | - | - | - | 5.0 | 10.0 | - | - | - | - | - | - | - | - |
| | Subtotal | | | 100 | 100 | 100 | 100 | 100 | 100 | 100 | 100 | 100 | 100 | 100 | 100 | 100 | 100 | 100 | 100 |
| Initiator, Chain transfer agent | | Dodecyl mercaptan | | 0.80 | 0.14 | 0.80 | 0.80 | 0.80 | 0.80 | 0.60 | 0.80 | 0.16 | 0.80 | 0.14 | 0.80 | 0.16 | 0.80 | 0.14 | 0.80 |
| | | 2,2-Azobis(2,4-dimethylvaleronitrile) | | 0.5 | 0.5 | 0.5 | 0.5 | 0.5 | 0.5 | 0.5 | 0.5 | 0.5 | 0.5 | 0.5 | 0.5 | 0.5 | - | 0.5 | 0.5 |
| | | 2,2-Azobis(2-methylbutyronitrile) | | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| Mw of copolymer ($\times 10^4$) | | | | 2.5 | 15.0 | 2.5 | 2.5 | 2.5 | 2.5 | 4.0 | 2.5 | 10.0 | 2.5 | 15.0 | 2.5 | 10.0 | 2.5 | 15.0 | 2.5 |
| SP value of copolymer $(cal/cm^3)^{1/2}$ | | | | 9.57 | 9.57 | 9.63 | 9.74 | 9.57 | 9.52 | 9.59 | 9.58 | 9.77 | 9.51 | 9.51 | 9.97 | 9.97 | 9.85 | 9.85 | 9.18 |
| Percentage of total weight of monomer (a) and monomer (b) | | | | 32.0 | 32.0 | 28.0 | 33.0 | 32.0 | 29.0 | 34.0 | 32.0 | 52.0 | 32.0 | 32.0 | 45.0 | 45.0 | 37.0 | 37.0 | 20.0 |
| Weight ratio (b/a) of monomer (b) to monomer (a) | | | | 0.036 | 0.036 | 0.031 | 0.042 | 0.036 | 0.036 | 0.042 | 0.036 | 0.040 | 0.031 | 0.031 | 0.064 | 0.064 | 0.053 | 0.053 | 0.020 |
| | | | | Example | | | | | | | | | | | | | | | |
| | | | | 26 | 27 | 28 | 29 | 30 | 31 | 32 | 33 | 34 | 35 | 36 | 37 | 38 | 39 | 40 | 41 |
| Lubricating oil composition | | | | V-1 | V-2 | V-3 | V-4 | V-5 | V-6 | V-7 | V-8 | V-9 | V-10 | V-11 | V-12 | V-13 | V-14 | V-15 | V-16 |
| SP value of base oil $(cal/cm^3)^{1/2}$ | | | | 8.30 | 8.30 | 8.30 | 8.30 | 8.30 | 8.30 | 8.30 | 8.30 | 8.30 | 8.30 | 8.30 | 8.30 | 8.30 | 8.30 | 8.30 | 8.30 |
| $\Delta SP$ $(cal/cm^3)^{1/2}$ between copolymer and base oil | | | | 1.27 | 1.27 | 1.33 | 1.44 | 1.27 | 1.22 | 1.29 | 1.28 | 1.47 | 1.21 | 1.21 | 1.67 | 1.67 | 1.55 | 1.55 | 0.88 |
| Amount of copolymer in lubricating oil composition (% by weight) | | | | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Performance evaluation | Kinematic viscosity with additive ($mm^2/s$) | | 100°C | 3.23 | 3.49 | 3.20 | 3.17 | 3.23 | 3.23 | 3.32 | 3.24 | 3.50 | 3.19 | 3.45 | 3.20 | 3.46 | 3.16 | 3.41 | 3.33 |
| | | | 40°C | 12.47 | 13.17 | 12.34 | 12.21 | 12.38 | 12.42 | 12.86 | 12.43 | 13.02 | 12.30 | 12.99 | 12.37 | 13.06 | 12.20 | 12.88 | 13.15 |
| | Viscosity index | | | 128 | 151 | 127 | 126 | 131 | 130 | 133 | 131 | 157 | 127 | 150 | 127 | 149 | 125 | 146 | 127 |
| | Maximum non-seizure load (N) | | | 850 | 770 | 830 | 800 | 850 | 850 | 850 | 840 | 850 | 880 | 800 | 830 | 780 | 840 | 760 | 780 |

[Table 3]

| | | Copolymer (A) | SP value of structural unit | Example 17 | 18 | 19 | 20 | 21 | 22 | 23 | 24 | 25 | Comparative Example 1 | 2 | 3 | 4 |
|---|---|---|---|---|---|---|---|---|---|---|---|---|---|---|---|---|
| | | | | A-17 | A-18 | A-19 | A-20 | A-21 | A-22 | A-23 | A-24 | A-25 | B-1 | B-2 | B-3 | B-4 |
| Formulation of monomers (parts by weight) | Monomer (a) | (a-1) Adduct of HEMA with ε-caprolactone (3 mol) | 11.04 | - | - | - | - | - | - | - | - | - | - | - | 20.0 | - |
| | | (a-2) Adduct of HEMA with ε-caprolactone (4 mol) | 10.87 | - | - | - | - | - | - | - | - | - | - | - | - | - |
| | | (a-3) Adduct of HEMA with ε-caprolactone (1.9 mol) | 11.36 | - | - | - | - | - | - | - | - | - | - | 20.0 | - | - |
| | | (a-4) Adduct of HEA with ε-caprolactone (2.6 mol) | 11.30 | - | - | - | - | - | - | - | - | - | - | - | - | 10.0 |
| | | (a-5) Adduct of HEMA with ε-caprolactone (5 mol) | 10.75 | 19.6 | - | - | - | - | - | - | - | - | - | - | - | - |
| | | (a-6) Dodecyl-terminated ester of adduct of HEMA with ε-caprolactone (4 mol) | 9.68 | - | - | - | - | - | - | - | - | - | 15.0 | - | - | - |
| | | (a-7) Adduct of HEA with ε-caprolactone (10 mol) | 10.68 | - | 18.0 | 18.0 | - | - | - | - | - | - | - | - | - | - |
| | | (a-8) Adduct of HEMA with ε-caprolactone (20 mol) | 11.32 | - | - | - | 12.5 | 12.5 | - | - | - | - | 25.0 | - | - | - |
| | | (a-9) Butyl-terminated ester of adduct of HEMA with ε-caprolactone (4 mol) | 9.96 | - | - | - | - | - | 31.0 | 31.0 | - | - | - | - | - | - |
| | | (a-10) Butyl-terminated ester of HEMA with ε-caprolactone (7 mol) | 10.40 | - | - | - | - | - | - | - | 22.0 | 22.0 | - | - | - | 5.0 |
| | Monomer (b) | (b-1) 2-Hydroxyethyl acrylate | 14.48 | - | 0.01 | 0.01 | - | - | - | - | - | - | - | - | - | - |
| | | (b-2) 2-Hydroxyethyl methacrylate | 13.47 | 0.4 | - | - | 1.5 | 1.5 | 1.0 | 1.0 | 1.0 | 1.0 | 5.0 | - | - | - |
| | | (b-3) 2-Hydroxy-2-methylpropyl methacrylate | 12.08 | - | - | - | - | - | - | - | - | - | - | 7.5 | - | - |
| | Monomer (c) | (c-1) Methacrylic acid ester of Neodol 23 | 8.95 | - | 15.99 | 15.99 | 20.0 | 20.0 | - | - | - | - | - | - | - | 30.0 |
| | | (c-2) n-Hexadecyl methacrylate | 8.93 | - | 21 | 21 | 21.0 | 21.0 | - | - | - | - | 12.5 | 49.5 | - | 21.0 |
| | | (c-3) n-Octadecyl methacrylate | 8.9 | - | 9.0 | 9.0 | 9.0 | 9.0 | - | - | - | - | 12.5 | 23.0 | - | 9.0 |
| | | (c-4) 2-Decyltetradecyl methacrylate | 8.77 | 80.0 | 21.0 | 21.0 | 21.0 | 21.0 | - | - | - | - | - | - | 80.0 | 7.5 |
| | | (c-5) 2-Dodecylhexadecyl methacrylate | 8.75 | - | 7.5 | 7.5 | 7.5 | 7.5 | 29.0 | 29.0 | 38.5 | 38.5 | - | - | - | 7.5 |
| | | (c-6) 2-Tetradecyloctadecyl methacrylate | 8.72 | - | 7.5 | 7.5 | 7.5 | 7.5 | 29.0 | 29.0 | 38.5 | 38.5 | - | - | - | - |
| | | (c-7) n-Dodecyl acrylate | 9.15 | - | - | - | - | - | - | - | - | - | 25.0 | - | - | - |
| | | (c-8) n-Octadecyl acrylate | 8.99 | - | - | - | - | - | - | - | - | - | - | - | - | - |
| | | (c-9) Polybutadiene macromonomer | 8.41 | - | - | - | - | - | - | - | - | - | 2.5 | - | - | - |
| | | (c-10) Polybutadiene macromonomer | 8.33 | - | - | - | - | - | - | - | - | - | 2.5 | - | - | - |
| | Monomer (d) | (d-1) Methyl methacrylate | 9.93 | - | - | - | - | - | - | - | - | - | - | - | - | - |
| | | (d-2) n-Butyl methacrylate | 9.45 | - | - | - | - | - | 10.0 | 10.0 | - | - | - | - | - | 10.0 |
| | Nitrogen-containing monomer (e) | (e-1) N,N-dimethylaminoethyl methacrylate | 9.52 | - | - | - | - | - | - | - | - | - | - | - | - | - |
| | Subtotal | | | 100 | 100 | 100 | 100 | 100 | 100 | 100 | 100 | 100 | 100 | 100 | 100 | 100 |
| Initiator, Chain transfer agent | Dodecyl mercaptan | | | 0.30 | 0.80 | 0.30 | 0.80 | 0.60 | 0.80 | 0.14 | 0.80 | 0.14 | 0.60 | 0.30 | 0.80 | 0.16 |
| | 2,2-Azobis(2,4-dimethylvaleronitrile) | | | 0.5 | 0.5 | 0.5 | 0.5 | 0.5 | 0.5 | 0.5 | 0.5 | 0.5 | 0.5 | - | - | - |
| | 2,2-Azobis(2-methylbutyronitrile) | | | 0.4 | 0.4 | 0.4 | 0.4 | 0.4 | 0.4 | 0.4 | 0.4 | 0.4 | 0.4 | 0.4 | 0.4 | 0.4 |
| Mw of copolymer ($\times 10^4$) | | | | 7.5 | 2.5 | 7.5 | 2.5 | 4.0 | 2.5 | 15.0 | 2.5 | 15.0 | 4.0 | 7.5 | 2.5 | 10.0 |
| SP value of copolymer $(cal/cm^3)^{1/2}$ | | | | 9.18 | 9.18 | 9.18 | 9.24 | 9.24 | 9.23 | 9.23 | 9.15 | 9.15 | 9.89 | 9.65 | 9.22 | 9.27 |
| Percentage of total weight of monomer (a) and monomer (b) | | | | 20.0 | 18.0 | 18.0 | 14.0 | 14.0 | 32.0 | 32.0 | 23.0 | 23.0 | 45.0 | 27.5 | 20.0 | 15.0 |
| Weight ratio (b/a) of monomer (b) to monomer (a) | | | | 0.020 | 0.0006 | 0.0006 | 0.12 | 0.12 | 0.031 | 0.031 | 0.045 | 0.045 | 0.125 | 0.375 | 0.000 | 0.000 |
| Lubricating oil composition | | | | Example 42 | 43 | 44 | 45 | 46 | 47 | 48 | 49 | 50 | Comparative Example 5 | 6 | 7 | 8 |
| | | | | V-17 | V-18 | V-19 | V-20 | V-21 | V-22 | V-23 | V-24 | V-25 | W-1 | W-2 | W-3 | W-4 |
| SP value of base oil $(cal/cm^3)^{1/2}$ | | | | 8.30 | 8.30 | 8.30 | 8.30 | 8.30 | 8.30 | 8.30 | 8.30 | 8.30 | 8.30 | 8.30 | 8.30 | 8.30 |
| ΔSP $(cal/cm^3)^{1/2}$ between copolymer and base oil | | | | 0.88 | 0.88 | 0.88 | 0.94 | 0.94 | 0.93 | 0.93 | 0.85 | 0.85 | 1.59 | 1.35 | 0.92 | 0.97 |
| Amount of copolymer in lubricating oil composition (% by weight) | | | | 2.0 | 2.0 | 2.0 | 2.0 | 2.0 | 2.0 | 2.0 | 2.0 | 2.0 | 2.0 | 2.0 | 2.0 | 2.0 |
| Performance evaluation | Kinematic viscosity with additive ($mm^2/s$) | | 100°C | 3.46 | 3.26 | 3.39 | 3.27 | 3.33 | 3.27 | 3.53 | 3.30 | 3.56 | 3.23 | 3.33 | 3.33 | 3.402 |
| | | | 40°C | 13.90 | 12.81 | 13.17 | 12.86 | 13.05 | 12.90 | 13.62 | 13.16 | 13.91 | 12.38 | 12.72 | 13.11 | 13.21 |
| | Viscosity index (VI) | | | 129 | 125 | 136 | 125 | 130 | 124 | 146 | 122 | 143 | 131 | 138 | 128 | 137 |
| | Maximum non-seizure load (N) | | | 750 | 790 | 760 | 790 | 760 | 830 | 750 | 850 | 770 | 710 | 700 | 680 | 680 |

The monomers listed in Tables 2 and 3 are as follows.

(b-1): 2-hydroxyethyl acrylate
(b-2): 2-hydroxyethyl methacrylate
(b-3): 2-hydroxy-2-methylpropyl methacrylate
(c-1): methacrylic acid ester of Neodol 23 (Shell Chemicals, a blend of C12 and C13 linear or branched alkyl alcohols (weight ratio = linear C12:branched C12:linear C13:branched C13 = 40:10:40:10))

(c-2): n-hexadecyl methacrylate
(c-3): n-octadecyl methacrylate
(c-4): 2-decyltetradecyl methacrylate
(c-5): 2-dodecylhexadecyl methacrylate
(c-6): 2-tetradecyloctadecyl methacrylate
(c-7): n-dodecyl acrylate
(c-8): n-octadecyl acrylate
(c-9): polybutadiene macromonomer (ester of L-1203 (Kuraray Co., Ltd.) [1,2-adduct/1,4-adduct = 45/55] and methacrylic acid, Mn = 6960)
(c-10): polybutadiene macromonomer (ester of L-3203 (Kuraray Co., Ltd.) [1,2-adduct/1,4-adduct = 65/35] and methacrylic acid, Mn = 6960)
(d-1): methyl methacrylate
(d-2): n-butyl methacrylate
(e-1): N,N-dimethylaminoethyl methacrylate

<Mw of copolymer>

The weight average molecular weight (Mw) of each of the copolymers contained in the anti-wear agents of Examples 1 to 25 and Comparative Examples 1 to 4 was measured under the conditions described in <Conditions for measuring Mw of copolymer (A)>.

<SP value of copolymer>

The SP value of each copolymer was calculated based on the weight fractions of the constituent monomers used in the production.

<Percentage of total weight of monomers (a) and (b)>

The percentage of the total weight of the monomers (a) and (b) based on the total weight of the copolymer (A)-constituting monomers was calculated based on the weights of the monomers (a-1) to (a-10) and the monomers (b-1) to (b-3).

<Weight ratio (b/a) of monomer (b) to monomer (a)>

The weight ratio of the monomer (b) to the monomer (a) in the copolymer (A)-constituting monomers was calculated based on the weights of the monomers (a-1) to (a-10) and the monomers (b-1) to (b-3).

<Examples 26 to 50 and Comparative Examples 5 to 8>

Any of the anti-wear agents (A-1) to (A-25) and the comparative anti-wear agents (B-1) to (B-4) was added to a base oil I, which is described below, in an amount of 2% by weight (the amount in terms of solid) relative to the weight of the base oil, in other words such that the amount of the copolymer (A) in the lubricating oil composition was 2% by weight. Thus, lubricating oil compositions (V-1) to (V-25) and (W-1) to (W-4) were obtained.

To 85 parts by weight of the base oil I (mineral oil, SP value: 8.3, kinematic viscosity at 100°C: 2.4 $mm^2/s$, viscosity index: 96) was added 15 parts by weight of an additive package (Infineum T4641).

<Kinematic viscosity with additive>

The kinematic viscosities at 100°C and the kinematic viscosities at 40°C of the lubricating oil compositions (V-1) to (V-25) and (W-1) to (W-4) were measured by the method described in JIS-K 2283 (2000). The results are shown in Tables 2 and 3 as kinematic viscosities ($mm^2/s$) with additives.

<Viscosity index>

The viscosity indexes of the lubricating oil compositions (V-1) to (V-25) and (W-1) to (W-4) were measured by the method described in JIS-K 2283 (2000) and are shown in Tables 2 and 3.

The anti-wear effects of the lubricating oil compositions (V-1) to (V-25) and (W-1) to (W-4) were evaluated by the following method. The maximum non-seizure loads (N) measured by the following method are shown in Tables 2 and 3.

<Evaluation of anti-wear effect>

The test was conducted in accordance with ASTM D 2783, except for the test conditions described below. Specifically, for each lubricating oil composition, a highspeed four-ball tester was used to apply a load of 500 N while rotating the upper ball for 10 minutes, and the occurrence or non-occurrence of seizure was checked. When no seizure occurred, the load was increased by 10 N and the next run was performed. The load measured just before seizure occurred was defined as the maximum non-seizure load (N). The larger the value of the load, the less likely seizure occurs and the better the anti-wear effect.

<Measurement conditions>

Apparatus: KRL & Four-ball tester available from Space Creation Co., Ltd.
Balls: steel balls for four ball bearings, size: 1/2
Speed: 1760 rpm
Temperature: 25°C
Test duration for each run: 10 seconds
Initial test load: 500 N
Load increase interval: 10 N

As is clear from the results in the tables, the lubricating oil compositions (Examples 26 to 50) containing the anti-wear agents of the present invention have higher anti-wear properties than the lubricating oil compositions of Comparative Examples 5 to 8.

INDUSTRIAL APPLICABILITY

The lubricating oil compositions containing the anti-wear agents of the present invention are suitable as drive system lubricating oils (MTFs, differential gear oils, ATFs, belt-CVTFs, etc.), hydraulic oils (machine hydraulic oil, power steering oil, shock absorber oil, etc.), engine oils (gasoline and diesel, etc.), and traction oils.

## Claims

1. An anti-wear agent comprising a copolymer (A) that comprises, as essential constituent monomers:

   a monomer (a) represented by the following formula (1); and
   a monomer (b) represented by the following formula (2),
   a weight ratio (b/a) of the monomer (b) to the monomer (a) in the copolymer (A) being 0.0005 to 0.12,
   the formula (1) being as follows:

   [Chem. 1]

   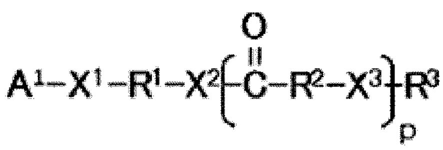 (1)

   wherein $A^1$ is a polymerizable group; $-X^1-$, $-X^2-$, and $-X^3-$are each independently a group represented by -O- or -NH-; $R^1$ is a C1-C4 alkylene group; $R^2$ is a C2-C20 alkylene group; $R^3$ is a hydrogen atom, a linear or branched C1-C44 alkyl group, a phenyl group having a linear or branched C1-C44 alkyl group, an acyl group having a linear or branched C1-C44 alkyl group, or a benzoyl group having a linear or branched C1-C44 alkyl group; and p is an integer of 1 to 100, where when p is 2 or more, a plurality of $R^2$'s are the same as or different from each other and a plurality of $X^3$'s are the same as or different from each other,
   the formula (2) being as follows:

[Chem. 2]

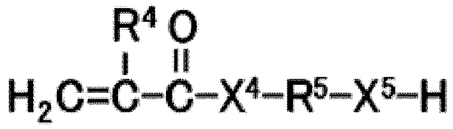

(2)

wherein $R^4$ is a hydrogen atom or a methyl group; $-X^4-$ is a group represented by -O- or -NH-; $R^5$ is a C1-C4 alkylene group; and $-X^5-$ is a group represented by -O- or -NH-.

**2.** The anti-wear agent according to claim 1,
wherein the copolymer (A) comprises as a constituent monomer a monomer (c) represented by the following formula (3):

[Chem. 3]

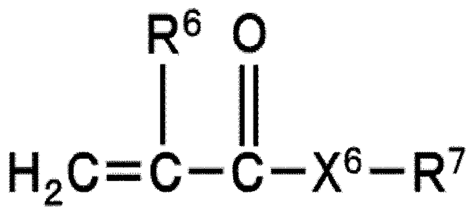

(3)

wherein $R^6$ is a hydrogen atom or a methyl group; $-X^6-$ is a group represented by -O-, $-O(AO)_m-$, or -NH-, where A is a C2-C4 alkylene group and m is an integer of 1 to 10, where when m is 2 or more, a plurality of As are the same as or different from each other; and $R^7$ is a linear or branched C5-C700 alkyl group.

**3.** The anti-wear agent according to claim 1,
wherein the copolymer (A) has a weight average molecular weight of 5,000 to 500,000.

**4.** A lubricating oil composition comprising:

the anti-wear agent according to any one of claims 1 to 3; and
a base oil.

**5.** The lubricating oil composition according to claim 4,
wherein the base oil has a kinematic viscosity at 100°C of 1 to 4 $mm^2/s$.

**6.** The lubricating oil composition according to claim 4, further comprising at least one selected from the group consisting of a viscosity index improver, a detergent, a dispersant, an antioxidant, an oiliness improver, a metal-based friction and wear modifier, an extreme pressure agent, a defoamer, an anti-emulsifier, a corrosion inhibitor, and a pour point depressant.

**INTERNATIONAL SEARCH REPORT**

International application No.
**PCT/JP2023/041951**

**A. CLASSIFICATION OF SUBJECT MATTER**

***C10M 145/14***(2006.01)i; ***C10M 149/04***(2006.01)i; ***C10M 149/06***(2006.01)i; *C10N 20/02*(2006.01)n; *C10N 20/04*(2006.01)n; *C10N 30/06*(2006.01)n; *C10N 40/04*(2006.01)n; *C10N 40/06*(2006.01)n; *C10N 40/08*(2006.01)n; *C10N 40/25*(2006.01)n
FI: C10M145/14; C10M149/04; C10M149/06; C10N20:02; C10N20:04; C10N30:06; C10N40:04; C10N40:08; C10N40:06; C10N40:25

According to International Patent Classification (IPC) or to both national classification and IPC

**B. FIELDS SEARCHED**

Minimum documentation searched (classification system followed by classification symbols)

C10M101/00-177/00; C10N20/02; C10N20/04; C10N30/06; C10N40/04; C10N40/06; C10N40/08; C10N40/25

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-172984 A (SANYO CHEMICAL IND LTD) 10 October 2019 (2019-10-10) claims 1, 6, 11, paragraphs [0011], [0081]-[0097], tables 1, 3, examples 9-10, 12, 23-24, 26 | 1-4, 6 |
| Y | claims 1, 6, 11, paragraphs [0011], [0081]-[0097], tables 1, 3, examples 9-10, 12, 23-24, 26 | 5 |
| Y | JP 2022-151618 A (SANYO CHEMICAL IND LTD) 07 October 2022 (2022-10-07) claim 1, paragraphs [0006], [0090], [0122], examples | 5 |
| Y | JP 2021-25007 A (EMG LUBRICANTS GK) 22 February 2021 (2021-02-22) claim 1, paragraphs [0005], [0015], [0122], examples | 5 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/041951**

| Patent document cited in search report | Publication date (day/month/year) | Patent family member(s) | Publication date (day/month/year) |
|---|---|---|---|
| JP 2019-172984 A | 10 October 2019 | (Family: none) | |
| JP 2022-151618 A | 07 October 2022 | (Family: none) | |
| JP 2021-25007 A | 22 February 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3730660 B
- JP 5822706 B
- JP 5684832 B
- JP 4686444 B
- JP 2022151618 A
- JP 6582021 B

### Non-patent literature cited in the description

- *Polymer Engineering and Science*, February 1974, vol. 14 (2), 147-154